# EUROPÄISCHE PATENTANMELDUNG

(11) **EP 2 905 482 A1**
(43) Veröffentlichungstag der Anmeldung: **12.08.2015**
(21) Anmeldenummer: 14153930.4
(22) Anmeldetag: 05.02.2014
(51) Int. Cl.: F16B 12/24, F16B 12/26, F16B 21/06

(54) **Verbindungssystem**

(71) Anmelder: Rauch, Augustin, 6822 Schnifis (AT)
(72) Erfinder: Rauch, Augustin, 6822 Schnifis (AT)
(74) Vertreter: Allwardt, Anke

(57) **Zusammenfassung**

Verbindungssystem (10) zum festen aber lösbaren Fügen von Einzelsegmenten (100, 200) zu gefügten Gegenständen mit wenigstens einer fest in einer Ausnehmung (99) eines ersten Einzelsegments (100) anordenbaren ersten Hülse und mit einem für ein Eingreifen in die Hülse ausgelegten Bolzen und mit einem Magneten (38), vermittels dessen sich Bolzen und Hülse anziehen und der mit Hilfe eines äussern Magnetfelds bewegbar ist. Bei dem vorgestellten Verbindungssystem dieses Typs ist die Hülse als Verriegelungshülse (14) und der Bolzen als Bolzenbaugruppe (40) derart ausgestaltet, dass Verriegelungshülse (14) und Bolzenbaugruppe (40) vermittels eines Schnappmechanismus in einer festen aber lösbaren mechanischen Verbindung zusammenfügbar sind und die mechanische Verbindung mittels des Magneten (38) gegen eine unbeabsichtigte Trennung sicherbar ist, wobei die Sicherung durch Bewegung des Magneten mittels äusserem Magnetfeld lösbar ist.

## Beschreibung

Die vorliegende Erfindung betrifft ein Verbindungssystem, welches ein festes aber lösbares Fügen von verschiedenen Einzelsegmenten miteinander zu einer gefügten Einheit erlaubt, insbesondere das feste aber lösbare Fügen von Möbelsegmenten zur Bildung eines Möbels, wie beispielsweise eines Regals, Schranks oder Bettes oder ein solches Fügen von Türen bzw. Türrahmen oder Fenstern bzw. Fensterrahmen mit einem Türband, Fensterband bzw. das Fügen von Möbelsegmenten, Tür- oder Fenstersegmenten mit einem Beschlag, oder auch das Fügen von Fliesen, Parkettstäben, Dielen, Bodenplatten mit dem jeweiligen Untergrund bzw. miteinander.

Aus dem Stand der Technik sind verschiedene Möglichkeiten bekannt, Tür-, Fenster oder Möbelsegmente ohne Schrauben fest, aber in der Regel unlösbar zusammenzufügen. Zinkungen, Schwalbenschwanz-Verbindungen, Nut-FederVerbindungen und Zapfen-Verbindungen sind dabei wohl die ältesten bekannten Verbindungsarten. Da es sich hier um satt sitzende formschlüssige bzw. kombinierte form-kraftschlüssige Verbindungen handelt, benötigt man zum Erstellen der Fügung meist wenigstens einen Hammer. Eine Lösbarkeit solcher Fügungen ist oft gar nicht oder nur unter grossem Kraftaufwand, der Gefahr der Beschädigung der einzelnen Teile und ebenfalls mit Werkzeugen wie Zangen und Hebeln gegeben.

Um lösbare Fügungen zu schaffen werden heute im Bereich von Möbeln, Türen und Fenstern einzelne Elemente in der Regel durch Schraubverbindungen zusammengefügt. Zum Erstellen wie auch zum Lösen dieser festen, aber lösbaren Verbindungen benötigt man jeweils Werkzeug, das auf die jeweiligen Schrauben bzw. Muttern abgestimmt sein muss. Ausserdem muss der Schraubenkopf bzw. die Mutter zum Lösen der Verbindung zugänglich sein, woraus meist eine ästhetisch unbefriedigende Lösung resultiert. Ebenfalls bekannt sind Verriegelungen, bei denen ein erstes Verbindungselement, meist eine Schraube oder ein Stift, so mit einem ersten Bauteil verbunden ist, dass es mit einem Abschnitt über das Bauteil hinausragt. Dieser überstehende Abschnitt des ersten Verbindungselements greift in ein an einem zweiten Bauteil angeordneten zweites Verbindungselement ein, das als Verriegelungselement ausgebildet ist, und kann durch Verschieben oder Verdrehen eines der beiden Verbindungselemente verriegelt und auch wieder gelöst werden. Aber auch hierzu muss eines der beiden Verbindungselemente zugänglich sein, mit dem entsprechenden ästhetischen Nachteil.

Um diesen Nachteil zu umgehen, sind Verriegelungselemente vorgeschlagen worden, welche durch magnetische Felder bewegt und von einer unverriegelten in eine verriegelte Position und zurück bewegbar sind. Auch hierfür wird ein passendes Werkzeug benötigt, mit dem das entsprechende Magnetfeld erzeugt werden kann.

Aus dem Dokument CA 2101837 ist eine Magnetverbindung bekannt, die zwei magnetische, zylindrische ausgebildete Magnetelemente umfasst. Jedes Magnetelement umfasst zwei magnetische Halbzylinder, die je zwei einander gegenüberliegende Stirnseiten aufweisen, wovon die eine einen Nordpol und die gegenüberliegende Stirnseite einen Südpol bildet. Die zwei magnetischen Halbzylinder jedes Magnetelements liegen mit ihren flachen Seiten derart bündig aufeinander, dass sie einen Vollzylinder bilden und jeweils ein Nordpol und ein Südpol aufeinanderliegen. Zur Herstellung einer festen Verbindung zwischen zwei Objekten, wird jedes der beiden Objekte mit einem Magnetelement versehen, wobei das eine Magnetelement versenkt in einer zylindrischen Aufnahme angeordnet ist, während das andere Magnetelement aus dem Objekt herausragt in dem es befestigt ist. Zur Verbindung wird das überstehende Magnetelement des einen Objekts in die Aufnahme des anderen Objekts gesteckt, wobei die Magnetelemente so gedreht werden, dass sich die Stirnseiten der Magnetelemente anziehen. Zum Lösen der Verbindung wird wenigstens ein Magnetelement so verdreht, dass die Nordpolstirnseiten und Südpolstirnseiten der beiden Magnetelemente aufeinander treffen und sich gegenseitig abstossen. Um die Magnetelemente zu drehen, benötigt man entweder ein Werkzeug, das ein äusseres Magnetfeld erzeugt, oder aber einen Zugriff von Aussen, was die entsprechenden ästhetischen Nachteile mit sich bringt.

Auch Magnetverbindungen ohne Verriegelungsmechanismus sind vorgeschlagen worden. Aus der WO 2011/065736 A1 ist beispielsweise ein Tisch bekannt, in dessen Tischplatte Vertiefungen eingelassen sind, in welche Permanentmagnete eingesetzt werden können. Das Gestell, auf dem die Tischplatte ruhen soll, ist entweder selber metallisch, so dass über die in die Vertiefungen eingesetzten Magnete eine magnetische Verbindung mit dem Gestell hergestellt wird, oder aber im Gestell sind an passendem Ort metallische Teile mit dem Gestell verbunden, die für die magnetische Verbindung sorgen. Für das Fügen der Tischplatte mit dem Gestell wird somit kein Werkzeug benötigt. Nachteilig ist hier, dass die Tischplatte durch die Magnete senkrecht auf dem Gestell fixiert ist. Wenn die Magnetkräfte aber so gering sind, dass diese Verbindung ohne Werkzeug und grossen Kraftaufwand wieder lösbar ist, so ist die Tischplatte gegenüber dem Gestell seitlich verschiebbar. Sind aber die Magnetkräfte so gross, das auch ein seitliches Verschieben der Tischplatte gegenüber dem Gestell verhindert wird, so ist die Verbindung nicht mehr ohne grossen Kraftaufwand und ohne Werkzeug lösbar.

Das Fügen von Fliesen, Parkettstäben, Dielen, Bodenplatten mit dem jeweiligen Untergrund erfolgt heute in der Regel durch kleben bzw. verlegen mit abbindenden zementösen Fügemassen, wodurch eine unlösbare Fügung entsteht, was unter Umständen unerwünscht sein kann. Werden Parkettstäbe, Dielen, Bodenplatten dagegen miteinander verbunden so handelt es sich meist um formschlüssige bzw. formkraftschlüssige Fügungen, wie beispielsweise die bereits oben genannten Schwalbenschwanz- oder Nut-FederVerbindungen. Aber auch diese Verbindungen lassen sich in der Regel nur sehr schwer und unter grossem Kraftaufwand wieder lösen und dies leider auch nur selten beschädigungsfrei.

Aus der US 3,512,324 ist ein aus Einzelplatten variabel verlegbarer Fussboden bekannt, dessen Einzelplatten mit Bolzen bzw. Streben versehen sind, welche in gegengleich ausgebildete Schlitze bzw. Löcher einer benachbarten Platte eingreifen. Auf diese Weise sind die Platten zueinander ausgerichtet und fixiert. Die Bolzen und Streben sind unlösbar fest mit den Platten verbunden, z. B. durch verkleben. Um die Platten zusätzlich in ihrer Lage zueinander zu sichern, können die Löcher bzw. Schlitze mit magnetischer oder magnetisierbarer Auskleidung versehen sein, und die Bolzen bzw. Streben können entsprechend magnetisch oder magnetisierbar derart ausgestaltet sein, dass beim Eingriff der Bolzen bzw. Streben in die Löcher bzw. Schlitze zusätzlich eine magnetische Haltekraft wirkt. Für die Montage bzw. Demontage dieser Fussbodenplatten benötigt man kein Werkzeug, und auch die oben beschriebenen ästhetischen Probleme ergeben sich nicht. Allerdings ist, je nachdem, ob es sich bei der verlegten Einzelplatte um eine zentrale Platte, eine Randplatte oder eine Eckplatte handelt, jeder Plattentyp in der Verteilung der Bolzen, Streben, Schlitze und Löcher anders ausgestaltet. Entsprechend viele unterschiedliche Platten werden benötigt bzw. müssen vorrätig gehalten werden. Die Vielfalt der zu verwendenden Platten macht das Verlegen kompliziert, so dass es entweder viel Erfahrung mit diesem System oder einer sehr genaue Anleitung bedarf, um einen Boden aus diesem Plattensystem zu verlegen. Zudem sind die vorstehenden Bolzen und Streben nachteilig bei Lagerung und Transport und können leicht zu Beschädigungen führen z.B. durch abbrechen oder verbiegen der Streben und Bolzen oder durch verkratzen der Platten.

Das hier vorgeschlagene Verbindungssystem will hier Abhilfe schaffen und das zuverlässige und lösbare Fügen von Bauteilen höchst flexibel ermöglichen.

Das hier vorgeschlagene Verbindungssystem will ein Verbindungssystem bereitstellen, das intuitiv, mit geringem Montageaufwand und auch von Laien ohne Einarbeitungszeit verwendbar ist.

Darüber hinaus ist es eine weitere Aufgabe der Erfindung, Einzelsegmente bereitzustellen, die mittels des Verbindungssystems einfach, fest aber lösbar miteinander verbindbar sind, sowie gefügte Einheiten bereitzustellen, die mittels eines solchen Verbindungssystems aus derartigen Segmenten gefügt sind.

Solche gefügten Einheiten können aus der Gruppe folgender Einheiten stammen: Möbel, Bodenbeläge, Türen, Fenster, Fliesenwände - wobei die Fliesenwände auch Fliesendecken oder Fliesenböden sein können; Bodenbeläge, wobei die Bodenbeläge Parkettstäbe, Dielen, Planken, Bretter oder Bodenplatten als Segmente umfassen können. Bodenbeläge bzw. Fliesen aus transparentem oder semitransparentem Material zur Erstellung von Leuchtwänden, Leuchtdecken, Leuchtböden sind denkbar.

Mindestens eine dieser Aufgaben wird in erfindungsgemässer Weise durch ein Verbindungssystem gemäss Anspruch 1, ein Einzelsegment gemäss Anspruch 13 oder eine gefügte Einheit gemäss Anspruch 15 gelöst. Vorteilhafte Ausgestaltungen der Erfindung finden sich jeweils in den abhängigen Ansprüchen.

Ein Verbindungssystem zum festen aber lösbaren Fügen von Einzelsegmenten zu einem gefügten Gegenstand weist eine versenkt und fest in einer Ausnehmung eines ersten Einzelsegments anordenbare Hülse auf und einen Bolzen, der für ein Eingreifen in die genannte Hülse ausgestaltet ist. Ausserdem besitzt sie einen Magneten, vermittels dessen eine magnetische Anziehungskraft in der Fügung wirkt, und der durch ein äusseres Magnetfeld derart bewegbar ist, dass die Fügung lösbar ist. Erfindungsgemäss ist die Hülse eine Hülsenbaugruppe und der Bolzen eine Bolzenbaugruppe. Hülsenbaugruppe und Bolzenbaugruppe sind derart aufgebaut, dass sie vermittels eines Schnappmechanismus in einer festen aber lösbaren, mechanischen Verbindung zusammenfügbar sind, wobei der Schnappmechanismus mittels des Magneten sicherbar ist und diese Sicherung durch Bewegung des Magneten mittels eines äusseren Magnetfelds entsichert und die mechanische Verbindung zwischen Hülsenbaugruppe und Bolzenbaugruppe lösbar ist.

Hülsenbaugruppe und Bolzenbaugruppe sind insbesondere derart ausgestaltet, dass die Sicherung der mechanischen Verbindung zwischen Hülsenbaugruppe und Bolzenbaugruppe mit Hilfe des Magneten während des Fügeprozesses selbsttätig und ohne äusseres Zutun erfolgt.

Vorteilhafter Weise weist die Bolzenbaugruppe einen Sicherungszylinder mit einer Sperröffnung auf. Der Magnet ist Bestandteil eines Schaltelements, welches einen Sicherungszapfen aufweist, der zur Sicherung der mechanischen Verbindung zwischen Hülsenbaugruppe und Bolzenbaugruppe in die Sperröffnung des Sicherungszylinders einführbar ist.

Der Sicherungszylinder besitzt Flansche an Federelementen. Die Hülsenbaugruppe weist eine Verriegelungshülse mit einer im Innern der Verriegelungshülse liegenden Verriegelungsschulter auf. Beim Zusammenfügen von Bolzenbaugruppe und Hülsenbaugruppe wirken die federnd gelagerten Flansche und die Verriegelungsschulter in einem Schnappmechanismus zusammen, bei dem die Flansche in die Verriegelungsschulter einrasten und diese derart hintergreifen, dass sie eine feste mechanische Verbindung zwischen Bolzenbaugruppe und Hülsenbaugruppe realisieren.

Die Bolzenbaugruppe weist einen Bolzenhohlkörper auf, in dem ein Sicherungszylinder gelagert ist und der Aussenkonusflächen aufweist, die gegengleich mit Innenkonusflächen der Verriegelungshülse der Hülsenbaugruppe ausgebildet sind. Beim Zusammenfügen von Bolzenbaugruppe und Hülsenbaugruppe wirken diese zentrierend und/oder dichtend zusammenwirken.

Die Flansche des Sicherungszylinders ragen aus dem Bolzenhohlkörper heraus und überragen die benachbarte Aussenkonusfläche radial.

In einer Ausführungsform ist der Magnet Bestandteil eines Schaltelements und dieses Schaltelement ist in einem Hülsenkanal der Verriegelungshülse der Hülsenbaugruppe axial bewegbar angeordnet.

In einer anderen Ausführungsform ist dieses Schaltelement in der Bolzenbaugruppe so angeordnet, dass zumindest der Sicherungszapfen axial bewegbar ist.

In einer weiteren Ausführungsform ist die Bolzenbaugruppe als Doppelbolzen ausgebildet und dafür bestimmt, mit zwei Verriegelungshülsen zusammenzuwirken.

Für entsprechende Anwendungen weist das Verbindungssystem Mittel zur Erzeugung einer Schattenfuge zwischen den zusammenzufügenden Einzelsegmenten auf.

Unter anderem können jedoch auch Anbindungssegmente wie z.B. Möbelknöpfe, Griffleisten, etc., mit ihrer jeweiligen Innen- bzw. Gewindekontur auch direkt mit der Bolzenbaugruppe verbunden werden. In diesem Fall wird somit quasi das Innengewinde bzw. die Gewindekontur als Hülsenbaugruppe verwendet, sodass im Sinne der Erfindung die Hülsenbaugruppe dann durch das Innengewinde bzw. die Gewindekontur gebildet wird (mit anderen Worten wird also eine eigentliche, separate Hülsenbaugruppe durch das Innengewinde bzw. die Gewindekontur der z.B. Griffleiste ersetzt).

In einer besonderen Ausführungsform ist die Bolzenbaugruppe als Doppelbolzen ausgeführt und weist eine Wulst auf zur Erzeugung einer Schattenfuge.

Besonders vorteilhaft ist der Magnet (38) aus Neodym oder einer Neodym-Verbindung, insbesondere einer Neodym-Eisen-Bohr-Verbindung gefertigt.

Die Magnetstärke des Magnets ist unter anderem abhängig von dessen Form und Volumen. Dementsprechend kann eine gewünschte Magnetfeldstärke durch Auswahl eines entsprechend geformten Magnets oder durch die Wahl des magnetischen Materials für den Magneten bzw. des magnetisierbaren Gegenstücks eingestellt werden. Eine günstige Magnetfeldverteilung ergibt sich beispielsweise für einen zylindrisch geformten Magneten mit einem Verhältnis von Durchmesser zu Länge von 1:1.

Einzelsegmente, die mittels des beschriebenen Verbindungssystems zusammenfügbar sind, können blockartige Elemente oder plattenartige Elemente oder balkenartige Elemente oder Beschläge oder Fliesen oder Bodensegmente oder ein Untergrund etc. sein und wenigstens eine Ausnehmung bzw. durchgehende Öffnungen für die Aufnahme einer Hülsenbaugruppe oder einer Bolzenbaugruppe aufweisen, wie vorhergehend beschrieben.

In einer besonderen Ausführungsform ist das erfindungsgemässe Einzelsegment ein Einzelelement eines Möbels und weist Ausnehmungen bzw. Öffnungen bzw. durchgehende Öffnungen in einem unter anderem z.B. für den Möbelbau üblichen Raster und mit unter anderem z.B. für den Möbelbau üblichen Durchmessern auf.

Ein zerlegbarer, gefügter Gegenstand, insbesondere aus der Gruppe umfassend: Möbel, Türen, Fenster, Fliesenwände, Bodenbeläge, der aus Einzelsegmenten - wie sie oben beschrieben wurden - gefügt ist, und zwar mittels eines Verbindungssystems wie es oben beschrieben wurde, ist auch von Laien ohne große Vorkenntnisse zusammenfügbar.

Ein erfindungsgemässes Einzelsegment ist ein blockartiges, plattenartiges oder balkenartiges Element, ein Beschlag, wobei es sich um einen Funktions-, Dekor- oder Sicherheitsbeschlag für Möbel, Fenster, Türen, Regale etc. handeln kann, eine Fliese, ein Bodensegment oder ein Untergrund, Teile eines Gehäuses z.B. für Geräte, Maschinen, Beleuchtungselemente, ein Verkleidungselement insbesondere für die Innenverkleidung im Automobilbau und Schiffbau, in der Flug und Raumfahrttechnik, im Seilbahnbau und Liftbau etc., Tischplatten und Tischgestelle, Möbelsegmente, für Sitz- und Liegemöbel, Regale etc. Elemente von Werbe- Sicherheits- und Strassenschildern Elemente im Messe-, Bühnen-, Geräte-, Maschinen- und Ingenieursbau, Elemente von Zäunen, Geländern und Sicherheitsabschrankungen, Elemente von Bilderrahmen oder Buchbindeeinfassungen, etc. Jedes Einzelsegment weist Ausnehmungen bzw. Öffnungen bzw. durchgehende Öffnungen für die Aufnahme von wenigstens einer Hülsenbaugruppe und/oder für die Aufnahme von Teilen einer Bolzenbaugruppe eines erfindungsgemässen Verbindungssystems auf. Die Ausnehmungen und Öffnungen sind dabei so ausgestaltet, dass die Verbindungselemente darin versenkt, vorzugsweise unsichtbar darin versenkt, befestigt werden können.

Unter Beschlag werden Griffleisten und Griffe, Knöpfe, Knaufe etc. sowie Schlösser für Möbeltüren und Schubladen; Auszugselemente für Schubladen, Riegelelemente und Unterteilungen für Schubladen; Scharniere und Zierbänder ebenso verstanden, wie Fenstergriffe, Türgriffe, Türfallen, Schlösser für diese, Türbänder oder Fensterbänder.

Plattenartig ausgestaltete erfindungsgemässe Einzelsegmente, wie Sichtblenden, Möbelwände (Seiten, Front, Rückwände) Möbeldecken, Möbeldeckel oder Möbelböden sowie Seitenwände, Fronten, Rückwände und Böden von Schubladen, oder auch Türblätter, können aus den verschiedensten Plattenmaterialien gefertigt sein, mit ein- oder mehrlagigem Aufbau, in Leichtbau oder Schichtaufbau und sowohl in roher als auch beschichteter bzw. belegter oder anders veredelter Ausführung. Das Material, der mit dem Verbindungssystem zu verbindenden Einzelsegmente der Möbel, Türen oder Fenster kann aus der Gruppe folgender Materialien stammen: Naturstein, Kunststein, Metall, Kunststoff, Hart- und Weichhölzer, Glas, Acrylglas, Keramik, Glaskeramik, Rigips, Karton, insbesondere dicht verpresster Karton sowie Verbundmaterialien aus diesen Materialien bzw. Gemische dieser Materialien (wie z.B. Corian, etc.).

Die mit dem erfindungsgemässen Verbindungssystem zu verbindenden Einzelsegmente können beispielsweise die folgenden sein:
- Seitenwände, Deckenplatten, Böden sowie Türen, Deckel oder andere Frontelemente von Möbeln aus Holz, Metall oder Kunststoff;
- Schubladenelemente und Innenauszüge eines Möbels, die zusammengefügt werden sollen sowie Riegelelemente und Unterteilungen hierfür, wobei diese jeweils aus Holz, Metall oder Kunststoff gefertigt sein können (wobei wiederum nicht alle Elemente aus dem gleichen Material gefertigt sein müssen; beispielsweise kann die Schublade an sich aus Holz sein die Riegelelemente aber aus Metall und/oder die Unterteilungen aus Kunststoff);

- Einlegeböden, die mit Seitenwänden eines Möbels verbunden werden sollen;
- Teile eines Bettgestells, die miteinander verbunden werden sollen;
- Beschläge für solche Möbel, die mit entsprechenden Seitenwänden, Deckenplatten, Böden, Schubladenelementen eines Möbels verbunden werden sollen;
- Türblätter, Türfutter, Türverblendungen oder Türrahmen aus Holz, Metall oder Kunststoff, die mit entsprechenden Beschlägen verbunden werden sollen;
- Fensterflügel Fensterfutter, Fensterverblendungen oder Fensterrahmen aus Holz, Metall oder Kunststoff, die mit zugehörigen Beschlägen verbunden werden sollen; sowie
- Fensterflügel bzw. Türblätter mit einem Glaseinsatz, deren einzelne Segmente miteinander verbunden werden sollen.
- Fliesen, Wandelmente, Deckenelemente aus Metall, Keramik, Kunststoff, Kunststein oder Naturstein, Holz, transparentem oder semitransparentem Material;
- Bodensegmente wie Dielen, Parkettstäbe, Planken, Bretter, Bodenplatten;
- Untergrund aus Holz, Stein, Mauerwerk, Putz, Beton etc..

Ein erfindungsgemässes zerlegbares Möbelstück weist eine Mehrzahl (mindestens zwei) erfindungsgemässer, zusammensetzbarer Einzelsegmente mit Ausnehmungen für die Aufnahme von Bolzenbaugruppen bzw. Hülsenbaugruppen sowie ein erfindungsgemässes Verbindungssystem mit in diese Ausnehmungen eingesetzten Bolzenbaugruppen bzw. Hülsenbaugruppen, wobei die Einzelsegmente insbesondere Möbelwände, Möbelböden, Möbelfronten, Möbeldecken bzw. Möbeldeckel sowie Schubladen, deren Einzelsegmente, Sichtblenden, Zierleisten, unterschiedlichste Beschläge etc. sein können.

Das Verbindungssystem eignet sich für ein Verbinden von Einzelsegmenten sowohl horizontal als auch vertikal oder diagonal, für Korpusecken im rechten Winkel, sowie Gehrungs-, Verblendungs-, Verkleidungs-, Kranzleisten-, Wangen- und Rahmenverbindungen.

Um auch von Hand passgenau und ohne zu verkanten eine Bolzenbaugruppe (40), eine Hülsenbaugruppe (13) bzw. eine Verriegelungshülse (14) einer Hülsenbaugruppe (13) in eine Ausnehmung eines Einzelsegments einsetzen zu können, ist ein Werkzeug zum Setzen der Bolzenbaugruppe bzw. zum Setzen der Hülsenbaugruppe bzw. ihrer Verriegelungshülse vorgesehen. Das Werkzeug umfasst einen hohlzylindrischen Körper mit einem breiten Aufsetzteller, der mit seiner Aufsetzebene senkrecht zur Achse des Hohlzylinders ausgerichtet ist. Auf diese Weise ist es möglich, das Werkzeug immer plan und breit abgestützt auf die Einzelsegmentoberfläche aufzusetzen, so dass der zu Führungszwecken vorgesehene Hohlzylinder senkrecht zur Einzelsegmentoberfläche steht. In den Hohlzylinder des hohlzylindrischen Körpers ist ein Stempel einsetzbar, der an seiner in den hohlzylindrischen Körper einführbaren Seite mit einer Spitze versehen ist. Auf seiner der Spitze gegenüberliegenden Seite weist er einen Griff auf, der einen grösseren Aussendurchmesser aufweist als der Stempel und der auch grösser ist als der Innendurchmesser des hohlzylindrischen Körpers, so dass der Stempel nur bis zu einer definierten Tiefe in den hohlzylindrischen Körper eindringen kann bzw. nur einen definierten Bewegungsweg im hohlzylindrischen Körper hat.

In einer besonders bevorzugten Ausführungsform weist das Werkzeug angepasst an die zu setzende Bolzenbaugruppe bzw. Hülsenbaugruppe bzw. Verriegelungshülse austauschbare Stempel auf, die jeweils eine andere entsprechend an die zu setzende Bolzenbaugruppe, Hülsenbaugruppe bzw. Verriegelungshülse angepasste Spitze aufweisen. Die Tiefe, bis zu der ein solcher Stempel in den hohlzylindrischen Körper eindringen kann bzw. der Bewegungsweg des Stempels im hohlzylindrischen Körper, ist dann abhängig von seiner Spitze. Damit immer die richtigen Stempel verwendet werden, sind diese vorteilhafter Weise an ihrem Griff mit jeweils einer anderen Markierung, insbesondere einer anderen Farbe versehen, abhängig von der jeweiligen Spitze.

Sollte ein magnetgesteuertes Schaltelement nicht mehr durch ein äusseres Magnetfeld eines Schaltmagneten erreichbar sein, so ist für das Trennen einer Bolzenbaugruppe von einer Hülsenbaugruppe ein Trennwerkzeug für das Verbindungssystems vorgesehen. Das Trennwerkzeug umfasst Mittel zum temporären, festen Verbinden der Bolzenbaugruppe mit dem Trennwerkzeug; Mittel zum mechanischen Hinausschieben des Schaltelementes aus der Sperröffnung eines Sicherungszylinders der Bolzenbaugruppe, und zwar jenes Schaltelements, welches die mechanische Verbindung bzw. den Schnappmechanismus zwischen Bolzenbaugruppe und Hülsenbaugruppe vor einem ungewollten Lösen sichert. Des Weiteren sind Mittel zum Auseinanderschieben von Hülsenbaugruppe und Bolzenbaugruppe vorgesehen.

In einer bevorzugten Ausführungsform umfassen die Mittel zum Auseinanderschieben von Hülsenbaugruppe und Bolzenbaugruppe einen Exzenterhebel, der schwenkbar um eine Gelenkachse eines Gelenks mit einem Funktionszylinder verbunden ist, sowie ein Gehäuse, das axial verschiebbar auf dem Funktionszylinder gelagert ist und zum Auseinanderschieben mit zwei Gelenkbacken des Exzenterhebels zusammenwirkt. Die Mittel zum mechanischen Hinausschieben des Schaltelementes aus der Sperröffnung des Sicherungszylinders umfassen eine Nadel, die mittels einer Halterung im Funktionszylinder axial verschiebbar gelagert ist und immer wieder in ihre Ausgangsstellung zurückbewegbar ist, und zwar insbesondere mittels Magnetelementen, welche mit ihren Magnetfeldern einander abstossend ebenfalls verschiebbar im Funktionszylinder gelagert sind. Statt der Magnete sind aber auch vergleichbare Mittel, wie ein Federelement insbesondere eine Spiralfeder oder eine entsprechende Pneumatik etc. denkbar. Die Mittel zum temporären, festen Verbinden der Bolzenbaugruppe mit dem Trennwerkzeug umfassen einen Funktionstubus, der direkt oder indirekt z.B. via einen Teil eines Sperrzylinders fest mit dem Funktionszylinder verbunden ist. Der Funktionstubus ist an seinem, dem Funktionszylinder abgewandten Ende, mit einem nach innen vorstehenden Kragen versehen. Im Bereich des Kragens besitzt er einen äusseren Durchmesser, der etwas größer ist als der Innendurchmesser des Gehäuses, wobei sich der äussere Durchmesser insbesondere zum Kragen hin erweitert, insbesondere konusförmig erweitert. Der Funktionstubus ist weiter so ausgebildet, dass er sich in diesem Endbereich, der den Kragen aufweist, durch axiales Verschieben des Gehäuses zusammendrücken lässt.

Damit das Trennwerkzeug für verschiedene Varianten des Verbindungssystems, insbesondere mit verschiedenen Bolzenbaugruppen und/oder Hülsenbaugruppen eingesetzt werden kann, ist die Nadel austauschbar, so dass jeweils eine passende Nadel einsetzbar ist, z.B. mit passender Länge oder passendem Durchmesser.

Für die Verwendung im Zusammenhang mit Verbindungssystemen mit oder ohne Schattenfuge ist das Gehäuse gelenkseitig mit zwei Gehäuseflanschen versehen, die dazu bestimmt sind, mit zwei Gelenkbacken des Exzenterhebels zusammenzuwirken, wobei die beiden Gelenkbacken unterschiedlich große Radien aufweisen und je nach dem, ob das Verbindungssystem eine Schattenfuge aufweist oder nicht bzw. ob der Bolzen Mittel zum Bilden einer Schattenfuge aufweist oder nicht, kann das Trennwerkzeug verwendet werden, indem der kurze Gehäuseflansch mit der Gelenkbacke mit dem kleinen Radius oder mit der Gelenkbacke mit dem grossen Radius zusammenwirkt und der lange Gehäuseflansch entsprechend umgekehrt. Entsprechend ist der Weg, um welchen das Gehäuse durch Umlegen des Exzenterhebels axial auf dem Funktionszylinder des Trennwerkzeugs verschoben wird länger (Verbindungen mit Schattenfuge) oder kürzer (Verbindungen ohne Schattenfuge).

Das erfindungsgemässe Verbindungssystem wird nachfolgend anhand von in den Figuren dargestellten Ausführungsbeispielen näher beschrieben. Die Erläuterungen erfolgen nur beispielhaft und haben keine beschränkende Wirkung. In den

Figuren sind gleiche Elemente mit gleichen Bezugszeichen versehen. Die Figuren zeigen rein schematisch:
- Fig. 1: in perspektivischer Ansicht und Halbschnitt eine erste Ausführungsform eines erfindungsgemässen Verbindungssystems mit Hülsenbaugruppe, Schaltelement und Bolzenbaugruppe;
- Fig. 2a-c: in perspektivischer Ansicht und Halbschnitt die Hülsenbaugruppe des Verbindungssystems aus Fig. 1 mit Verriegelungshülse sowie das in der Verriegelungshülse angeordnete Schaltelement;
- Fig. 3: die Verriegelungshülse der Hülsenbaugruppe aus Fig. 1 und 2 in Schnittansicht;
- Fig. 4a-d: in Seitenansicht bzw. perspektivisch, das Schaltelement aus Fig. 2 mit seinen Bestandteilen;
- Fig. 5: in perspektivischer Ansicht die Bolzenbaugruppe des Verbindungssystems aus Fig. 1 mit Sicherungshohlkörper und Sicherungszylinder;
- Fig. 6: in Seitenansicht den Sicherungshohlkörper, aus Fig. 5;
- Fig. 7a, 7b: perspektivisch bzw. in Seitenansicht den Sicherungszylinder aus Fig. 5;
- Fig. 8a-8f: anhand des Verbindungssystems aus Fig. 1, in perspektivischer Darstellung der Elemente des Verbindungssystems, das erfindungsgemässe Verfahren zum Verbinden zweier Segmente mittels des erfindungsgemässen Verbindungssystems;
- Fig. 9a-9f: anhand des Verbindungssystems aus Fig. 1, gezeigt in perspektivischer Darstellung, das erfindungsgemässe Verfahren zum Lösen der Verbindung des Verbindungssystems und zum Trennen zweier mittels erfindungsgemässen Verbindungssystems fest miteinander verbundenen Segmente;
- Fig. 10a, 10b: in perspektivischer Ansicht und Halbschnitt eine zweite Ausführungsform des erfindungsgemässen Verbindungssystems mit zwei Verriegelungshülsen, zwei Schaltelementen und Bolzenbaugruppe;
- Fig. 11a, 11b: in Schnittansicht das Fügen zweier Segment mittels der Ausführungsform des Verbindungssystems aus Fig. 10a, 10b;
- Fig. 12a, 12b: in perspektivischer Ansicht und Halbschnitt eine dritte Ausführungsform des erfindungsgemässen Verbindungssystems, die eine Weiterbildung der zweiten Ausführungsform darstellt;
- Fig. 13a, 13b: in Schnittansicht das Fügen zweier Segmente mittels der Ausführungsform des Verbindungssystems aus Fig. 12a, 12b;
- Fig. 14a-14e: in perspektivischer Ansicht und Halbschnitt eine vierte Ausführungsform des erfindungsgemässen Verbindungssystems mit Verriegelungshülse, Schaltelement und Bolzenbaugruppe, inklusive Verwendungsbeispielen;
- Fig.15a, 15b: weitere Verwendungsbeispiele für die vierte Ausführungsform des Verbindungssystems aus den Fig. 14a bis 14e;
- Fig.16a bis 16c: Verwendungsbeispiele für eine Variante der vierten Ausführungsform des Verbindungssystems;
- Fig. 17a, 17b: in Schnittansicht, perspektivisch und (Fig. 17b) in teilweiser Sprengansicht, eine Variante zur ersten Ausführungsform des Verbindungssystems, bekannt aus den Fig. 1 bis 9c mit einer Variante der Verriegelungshülse;
- Fig. 18a, 18b: in perspektivischer Ansicht ein Verwendungsbeispiel für die Variante des Verbindungssystem aus Fig. 17a, 17b;
- Fig. 19a-19c: in Schnittansicht und perspektivisch eine weitere Variante zur vierten Ausführungsform des Verbindungssystems, das in den Fig. 14a bis 14e gezeigt ist, sowie ein Verwendungsbeispiel;
- Fig. 20: in Schnittansicht eine Variante zu der in den Fig. 19a-19c gezeigten Ausführungsform des Verbindungssystems;
- Fig. 21a-21c: in Schnittansicht und perspektivisch eine weitere Variante zu der in den Fig. 19a-19c gezeigten Ausführungsform des Verbindungssystems sowie ein Verwendungsbeispiel;
- Fig. 22a-22c: in Schnittansicht und perspektivisch noch eine Variante zu der in den Fig. 19a-19c gezeigten Ausführungsform des Verbindungssystems sowie ein Verwendungsbeispiel;
- Fig. 23a-23bc: in Schnittansicht und perspektivisch noch eine Variante zu der in den Fig. 19a-19c gezeigten Ausführungsform des Verbindungssystems;
- Fig. 24a-24b: in Seitenansicht bzw. perspektivisch im Halbschnitt ein erstes Werkzeug zum Setzen einer Bolzenbaugruppe, wie eine in Fig. 5 gezeigt ist;
- Fig. 25a-25b: in Seitenansicht bzw. perspektivisch im Halbschnitt ein zweites Werkzeug zum Setzen einer Hülsenbaugruppe, wie eine beispielsweise in Fig. 2 und 3 oder 14a gezeigt ist;
- Fig. 26a-26c: in Schnittansicht zwei zu fügende Segmente (Fig. 26a) und zwei unterschiedliche, prinzipielle Füge-Möglichkeiten bzgl. des resultierenden Spalts zwischen zwei gefügten Segmenten (Fig. 26b, 26c), welche mit dem Verbindungssystem bzw. mindestens mit einer seiner Ausführungsformen realisierbar sind;
- Fig. 27 bis 31: perspektivisch bzw. in Seitenansicht unterschiedliche Füge-Möglichkeiten bzgl. der Anordnung der zu fügenden Segmente zueinander, welche mit dem Verbindungssystem bzw. mindestens mit einer seiner Ausführungsformen realisierbar sind;
- Fig. 32: in Schnittansicht ein weiteres Verwendungsbeispiel für ein erfindungsgemässes Verbindungssystem gemäss Fig. 1;
- Fig. 33: ebenfalls in Schnittansicht ein Verwendungsbeispiel für eine Variante des Verbindungssystems, das in Fig. 10a, 10b gezeigt ist;
- Fig. 34 bis 37: perspektivisch bzw. in Seitenansicht unterschiedliche Verwendungsbeispiele für das Verbindungssystem, bei denen wenigstens ein zu fügendes Segment ein Beschlag ist und das andere zu fügende Segment ein Möbelsegment;
- Fig. 38: in Schnittansicht ein Verwendungsbeispiel für das Verbindungssystem, bei dem eine erste Sorte zu fügender Segmente Bodensegmente sind und das zweite zu fügende Segment ein Untergrund;
- Fig. 39: in Schnittansicht ein Verwendungsbeispiel für das Verbindungssystem, bei dem eine erste Sorte zu fügender Segmente Fliesen sind und das zweite zu fügende Segment ein Untergrund;
- Fig. 40: in Schnittansicht eine Variante zu der Ausführungsform des Verbindungssystems, wie es in Fig. 23a, 23b gezeigt ist;
- Fig. 41a, 41b: in Schnittansicht bzw. mindestens teilweiser Schnittansicht eine weitere Variante des Verbindungssystems und ein Verwendungsbeispiel; und
- Fig. 42a-42d: in Schnittansicht und perspektivisch ein Trennwerkzeug und seine Funktionsweise.

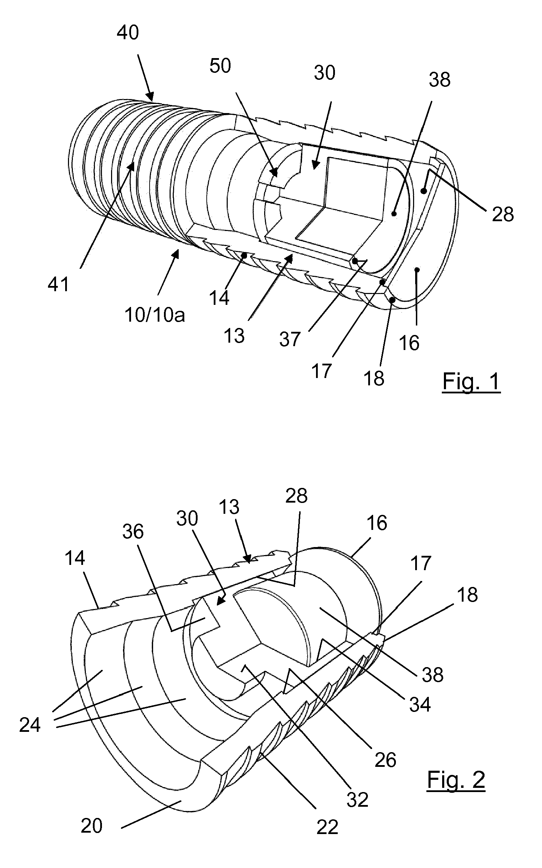

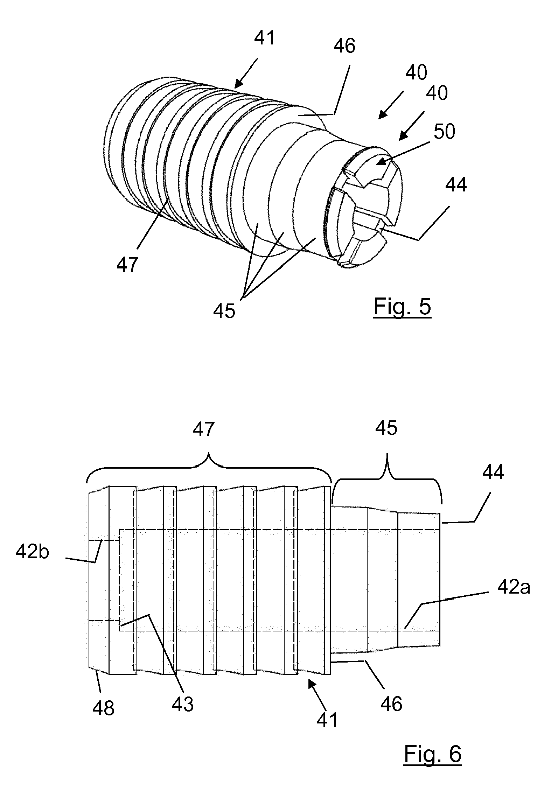

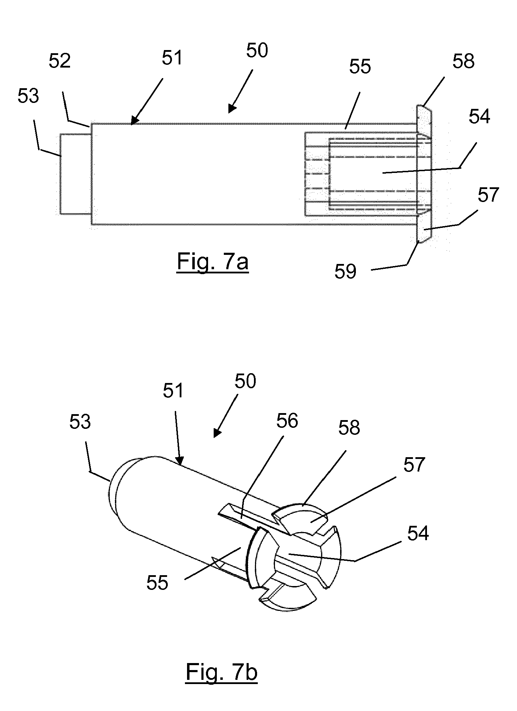

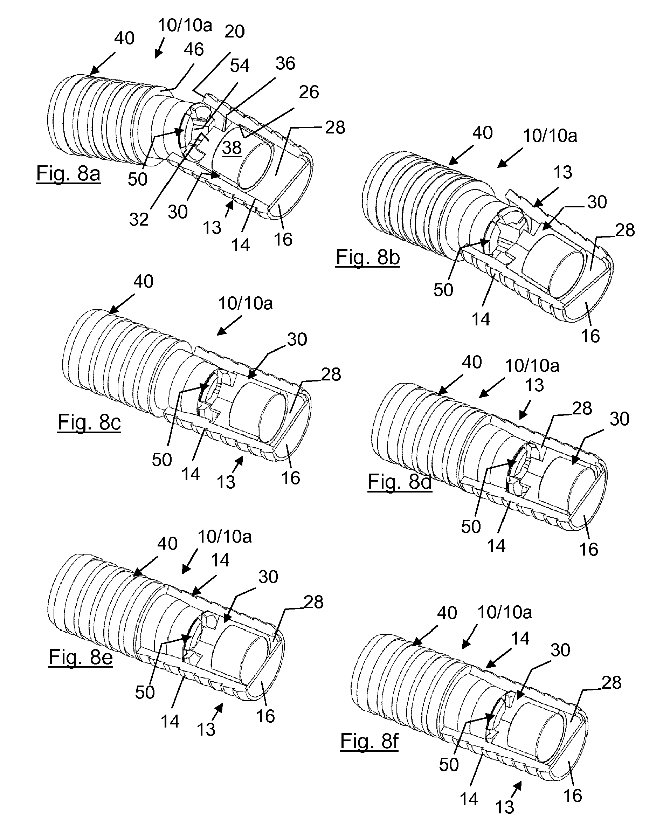

Anhand der Fig. 1 bis 9c werden im Folgenden die einzelnen Elemente eines erfindungsgemässen Verbindungssystems (insbesondere Fig. 1 bis 7b) und seine Funktionsweise (Fig. 8a bis 9c und 26a-c) im Detail erläutert.

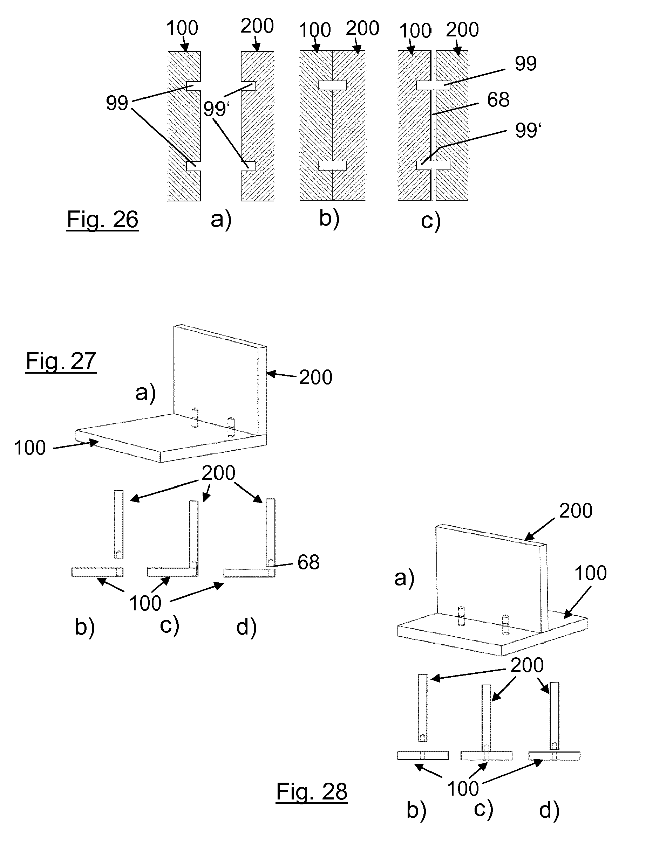

Ein erfindungsgemässes Verbindungssystem 10, wie es hier in einer ersten Variante 10a dargestellt ist, umfasst eine Bolzenbaugruppe 40 mit einem Sicherungshohlkörper 41 und einem Sicherungszylinder 50 sowie eine Hülsenbaugruppe 13 mit einer Verriegelungshülse 14 sowie ein Schaltelement 30. Um zwei Einzelsegmente 100, 200 (vgl. Fig. 26a-c) eines Gegenstandes, beispielsweise eines Möbels, einer Tür o.ä., mittels des Verbindungssystems fest aber lösbar zusammenzufügen, wird die Bolzenbaugruppe 40 in einer Ausnehmung 99 eines ersten Einzelsegments 100 fest eingesetzt, z.B. durch Spreizen, Kleben, Einpressen, Einschrauben etc. und die Verriegelungshülse 14 in einer Ausnehmung 99' des zweiten Einzelsegments 200. Zum Zusammenfügen werden die Einzelsegmente 100, 200 mit ihren Ausnehmungen 99, 99' aufeinanderzu bewegt, so dass die Bolzenbaugruppe 40 in die Verriegelungshülse 14 eingreifen kann (siehe Fig. 8a bis 8f).

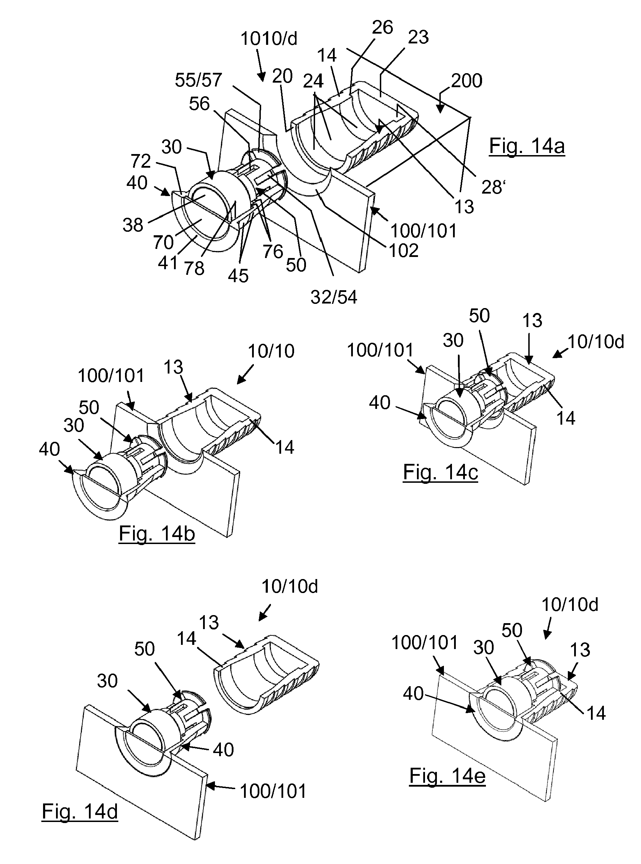

Die Verriegelungshülse 14 der Hülsenbaugruppe 13 weist an ihrem einen Ende eine Hülsenplanfläche 20 und an ihrem der Hülsenplanfläche 20 gegenüberliegenden Ende einen Hülsenboden auf, der einstückig mit dem Hülsenmantel ausgestaltet sein kann (vgl. beispielsweise die Ausführungsform der Fig. 14a bis 14e) oder, wie hier dargestellt, mittels einer Hülsenabdeckung 16 verschlossen ist. Wie hier gezeigt, kann die Hülsenabdeckung 16 beispielsweise in eine Abdeckungsaufnahme 17 eingepasst und dort fixiert sein. Vorzugsweise ist sie derart in die Abdeckungsaufnahme 17 eingepasst, dass sie die Verriegelungshülse 14 stirnseitig eben abschliesst. Zum Hülsenboden hin ist der Zylindermantel der Verriegelungshülse 14 angefast, so dass sich dort umlaufend eine gegenüber der axialen Richtung als auch gegenüber dem Hülsenboden geneigte Hülsenzentrierfläche 18 erstreckt. Die Hülsenzentrierfläche 18 erleichtert ein Einsetzen bzw. Einpressen der Verriegelungshülse 14 in eine Ausnehmung eines Einzelsegments, welches mit Hilfe des Verbindungssystems 10 mit einem anderen Segment verbunden werden soll. Dabei kann das Einsetzen bzw. Einpressen sowohl maschinell/automatisch als auch händisch erfolgen. Eine Aussenkontur 22 der Verriegelungshülse 14 kann abhängig von dem Material des Einzelsegments, in welches die Verriegelungshülse 14 eingesetzt und mit dem sie fest verbunden werden soll, unterschiedlich ausgestaltet sein. Sie kann glatt sein, rau, geriffelt, mit axialen Rillen/Vorsprüngen oder Umfangsrillen/-Vorsprüngen etc., oder sie kann auch als Aussengewinde ausgestaltet sein zum Einschrauben in das Einbaumaterial des Einzelsegments.

Die Verriegelungshülse 14 ist vorzugsweise aus einem gehärteten antimagnetischen Material gefertigt, wie beispielsweise aus einer Beryllium-Legierung. Als gut geeignet haben sich gehärtete Beryllium-Kupfer-Legierungen erwiesen. Die Hülsenabdeckung 16 ist mit Vorteil ebenfalls aus einer gehärteten Beryllium bzw. Beryllium-KupferLegierung gefertigt.

Von der Hülsenplanfläche 20 nach innen erstreckt sich ein erster Abschnitt mit aufeinander folgenden, abgestuften Innenkonusflächen 24, der durch eine Verriegelungsschulter 26 von einem zweiten Abschnitt getrennt ist, welcher sich bis zum Hülsenboden, in diesem Fall bis zur Hülsenabdeckung 16 erstreckt. Die Innenkonusflächen 24 verjüngen sich jeweils von aussen nach innen bzw. von der Hülsenplanfläche 20 zur Verriegelungsschulter 26 betrachtet mit unterschiedlicher Steigung. Der Radius der Innenkonusflächen 24 nimmt von aussen gegen die Verriegelungsschulter 26 stufenweise ab, wobei von aussen nach innen betrachtet der aussenliegende Radius jeder Innenkonusfläche gleich dem innenliegenden Radius der vorherigen Innenkonusflächen 24 ist. Der mittels der Verriegelungsschulter 26 vom ersten Abschnitt abgesetzte zweite Abschnitt weist einen grösseren Radius auf als der innenliegende Radius des innersten Innenkonus 24, der bis zum Hülsenboden gleich bleibt. In dem hier gezeigten Beispiel ist der zweite Abschnitt von Verriegelungsschulter 26 bis zum Hülsenboden so bemessen, dass darin ein Schaltelement 50 Platz findet und darin axial bewegbar ist, weswegen dieser Abschnitt auch als Hülsenkanal 28 bezeichnet wird.

Das Schaltelement 30 weist einen Sicherungszapfen 32 und eine Magnetaufnahme 34 auf, in welcher ein Magnet 38 fixiert ist. Sicherungszapfen 32 und Magnetaufnahme 34 sind vorzugsweise einstückig ausgebildet aus einem verschleissarmen, antimagnetischen Material. Als besonders geeignet haben sich Berylliumkupfer-Legierungen herausgestellt. Der Magnet ist vorzugsweise aus Neodym oder einer Neodym-Legierung gefertigt, insbesondere aus einer Neodym-Eisen-Bor (NdFeB) Legierung. Er besitzt vorteilhaft eine durch Galvanisieren veredelte Oberfläche. Als galvanisierte Magnetscheibe besitzt der Magnet 38 vorzugsweise abgerundete Kannten, so dass die galvanischen Oberflächenbeschichtung gut haftet.

Die Magnetaufnahme 34 und der Sicherungszapfen 32 weisen einen kreisförmigen Querschnitt auf, wobei der Aussenradius der Magnetaufnahme 34 so auf den Innenradius des Hülsenkanals 28 abgestimmt ist, dass das Sicherungselement ohne grosse Reibung aber auch ohne grosses Spiel, um ein Verkannten zu vermeiden, axial im Hülsenkanal 28 bewegbar ist. Der Hülsenkanal 28 ist in seiner axialen Ausdehnung so auf das Schaltelement 50 abgestimmt, dass sich das Schaltelement 50 im Hülsenkanal 28 mindestens um die axiale Länge des Sicherungszapfens 32 bewegen kann. Der Radius des Sicherungszapfens 32 ist wesentlich kleiner als ein Aussenradius der Magnetaufnahme 34 und konzentrisch zu dieser angeordnet, so dass sich zapfenseitig eine Anschlagschulter 36 ergibt. Auf der der Anschlagschulter 36 gegenüberliegenden Stirnseite des Schaltelements 50 weist dieses eine Anschlagfläche 37 auf, die in montiertem Zustand durch einen Rand der Magnetaufnahme 34 und eine Stirnseite des scheibenförmigen Magneten 38 gebildet wird.

Zur Montage wird der Magnet 38, zum Beispiel durch Presspassung, Schraubung oder Klebung in der Magnetaufnahme fixiert; das Schaltelement 50 wird von der Seite des Hülsenbodens her mit dem Sicherungszapfen 32 voran in den Hülsenkanal 28 geschoben, wo die Anschlagschulter 36 mit der Verriegelungsschulter 26 in Anschlag gelangt. Die Verriegelungshülse 14 wird bodenseitig mit der Hülsenabdeckung fest verschlossen. Das Schaltelement 30 ist somit - axial um mindestens die Länge des Sicherungszapfens 32 beweglich - im Hülsenkanal 28 eingeschlossen und wird in seiner axialen Bewegung einerseits durch die Hülsenabdeckung 16, andererseits durch die Verriegelungsschulter 26 begrenzt.

Die Bolzenbaugruppe 40 umfasst einen Sicherungshohlkörper 41 und einen in montiertem Zustand im Sicherungshohlkörper 41 befindlichen Sicherungszylinder 50. Der Sicherungshohlkörper 41 und der Sicherungszylinder 50 sind vorzugsweise aus einem magnetisierbaren Stahl, insbesondere aus einem gehärteten Werkzeugstahl gefertigt, der vorteilhafter Weise korrosionsbeständig ist. Als sehr geeignet hat sich beispielsweise Werkzeugstahl Nr. 1.2085 erwiesen. Aussendurchmesser des Sicherungszylinders 50 und Innendurchmesser des Sicherungshohlkörpers 41 sind aufeinander abgestimmt, so dass der Sicherungszylinder 50 ohne grosses Spiel, satt in den Sicherungshohlkörper 41 eingesetzt werden kann.

Der Bolzenhohlkörper 41 ist analog zur Verriegelungshülse 16 an jener Stirnseite, mit der er in eine Ausnehmung eines Einzelsegments eingepasst wird, mit einer Hohlkörperzentrierfläche 48 versehen, welche das Einsetzen bzw. Einpressen in das Einbaumaterial des Einzelsegments sowohl bei automatischer/maschineller als auch bei händischer Montage erleichtert. Vom Ende mit der Hohlkörperzentrierfläche 48 erstreckt sich der Bolzenhohlkörper 41 mit seiner Zylinderwand bis zu einer gegenüberliegenden Stirnseite 44, die beim Zusammenfügen von Bolzenbaugruppe 40 und Verriegelungshülse 14 auf die Verriegelungshülse 14 zu bzw. in sie hinein bewegt wird.

Zwischen Hohlkörperzentrierfläche 48 und Bolzenhohlkörper 41 erstreckt sich innen im Sicherungshohlkörper 41 ein Hohlraum 42, in den wie gesagt der Sicherungszylinder 50 mit geringem bis gar keinem Spiel, satt eingesetzt werden kann. Damit der Sicherungszylinder 50 nicht durch den Sicherungshohlkörper 41 hindurchrutscht, weist der Sicherungshohlkörper 41 eine Hohlkörperinnenschulter 43 auf, bei der sich sein Hohlraum 42 von einem Abschnitt 42a mit grossem Durchmesser auf Seite der Stirnseite 44 abrupt in einen Abschnitt 42b mit geringerem Durchmesser auf Seite der Hohlkörperzentrierfläche 48 verringert. Gegengleich weist der Sicherungszylinder 50 eine Zylinderschulter 52 auf, an der sich der Aussendurchmesser des Zylinders vom Zylinderkörper 51 zu einem Zylinderfuss 53 hin abrupt verringert. Wird der Sicherungszylinder 50 nun in den Sicherungshohlkörper 41 von der Stirnseite 44 her eingesetzt, treffen Zylinderschulter 52 und Hohlkörperinnenschulter 43 aufeinander und verhindern ein Durchrutschen. Des Weiteren erleichtert der Zylinderfuss 53 die automatisierte Produktion der Bolzenbaugruppe 40.

Auf seiner dem Zylinderfuss 53 gegenüberliegenden Seite weist der Sicherungszylinder 50 Flansche 57, die radial vom Sicherungszylinder 50 abstehen und in eingestecktem Zustand im Bereich der Stirnseite 44 des Sicherungshohlkörpers 41 radial über dessen Zylinderwand hinausstehen. Für ein Zusammenspiel mit der Verriegelungshülse 14 beim Zusammenfügen von Verriegelungshülse 14 und Bolzenbaugruppe 40 weisen die Flansche 57 radial aussen, stirnseitig einen Führungskonus 58 auf und radial aussen, auf der dem Führungskonus 58 gegenüberliegenden Seite eine Gleitrundung 59.

Die Länge des Sicherungszylinder 50 ist so bemessen, dass die Flansche 57 sich mit der Stirnseite 44 des Bolzenhohlkörpers 41 in Anschlag befinden, wenn sich auch die Zylinderschulter 52 mit der Hohlkörperinnenschulter 43 im Anschlag befindet. Der Zylinderfuss 53 schliesst in diesem eingesteckten Zustand mit seinem äusseren Ende vorzugsweise eben ab mit der Zylinderwand des Sicherungshohlkörpers 41.

Der Zylinderkörper 51 des Sicherungszylinders 50 weist auf Seite der Flansche 57 Einschnitte 56 auf, die sich vorzugsweise gleichmässig über den Umfang verteilen und sich in axialer Richtung wenigstens über ein Drittel der Länge des Zylinderkörpers 51 erstrecken. Mit vergleichbarer Ausdehnung in axialer Richtung ist auf der gleichen Seite des Zylinderkörpers 51 eine konzentrische Sperröffnung 54 im Zylinderkörper 51 vorgesehen, so dass sich an diesem Ende des Zylinderkörpers 51 Federelemente 55 ergeben, die voneinander durch die Sperröffnung 54 und die Einschnitte 56 getrennt sind und stirnseitig mit den besagten Flanschen 57 versehen sind. Die Dimensionen von Sperröffnung 54 und Einschnitten 56 im Verhältnis zum Zylinderaussendurchmesser des Sicherungszylinders 50 werden in Abhängigkeit von dem für den Sicherungszylinder 50 gewählten Material bestimmt und zwar so, dass die Federelemente 55 sich radial in die Sperröffnung 54 hinein zusammendrücken lassen oder auch radial nach aussen aufspreizen lassen bei Entlastung aber von selbst in ihre Ausgangslage zurückstellen. Das Material ist dabei so gewählt, dass es auch bei einer häufigen Federbewegung - in die Sperröffnung hinein und/oder spreizen nach aussen und wieder in die Ausgangsposition zurück - nicht zu einer Materialermüdung kommt. Für ein Zusammenwirken mit dem Schaltelement 30 sind die Durchmesser der Sperröffnung 54 und der Durchmesser des Sicherungszapfens 32 so aufeinander abgestimmt, dass der Sicherungszapfen 32 in die Sperröffnung 54 passt, wenn sich die Federelemente 55 in ihrer Ausgangstellung befinden.

Wie die Verriegelungshülse 14 innen, so ist der Bolzenhohlkörper 41 aussen in zwei Abschnitte unterteilt, die daher als Aussenabschnitte bezeichnet werden. Die beiden Aussenabschnitte sind durch eine stufenartige Planfläche 46 voneinander getrennt, welche dazu vorgesehen ist, beim Zusammenfügen von Bolzenbaugruppe 40 und Verriegelungshülse 14 mit der Hülsenplanfläche 20 der Verriegelungshülse 14 vorzugsweise passgenau in Anschlag zu gelangen. Der erste Aussenabschnitt erstreckt sich zwischen der stufenartigen Planfläche 46 und der Stirnseite 44 und besitzt Aussenkonusflächen 45. Der zweite Aussenabschnitt erstreckt sich zwischen der stufenartigen Planfläche 46 und der Hohlkörperzentrierfläche 48 und besitzt eine Aussenkontur 47, deren Gestaltung analog derjenigen der Verriegelungshülse 16 ist, also analog abhängig von dem Einbaumaterial des Einzelsegments in welchem der Sicherungshohlkörper 41 fixiert wird, gewählt wird. Die stufenartige Planfläche 46 ist gegengleich zu Hülsenplanfläche 20 der Verriegelungshülse 14 ausgebildet und bildet in dem hier gezeigten Beispiel eine in etwa senkrechte Verbindung zwischen der Aussenkontur 47 und den Aussenkonusflächen 45, wobei die Aussenkontur 47 den grösseren Aussenradius aufweist, als die an die stufenartige Planfläche 46 anschliessende erste Aussenkonusfläche. Die Aussenkonusflächen 47 sind gegengleich und mit ihren Radien passgenau zu den Innenkonusflächen 24 der Verriegelungshülse 14 ausgebildet. Das heisst, sie folgen abgestuft aufeinander mit unterschiedlichen Steigungen, wobei sich die Aussenkonusflächen 45 von der stufenartigen Planfläche 46 zur Stirnseite 44 hin verjüngen.

Die Aussenkonusflächen 45 des Sicherungshohlkörpers 41 ermöglichen durch ihr Zusammenspiel mit den gegengleich ausgebildeten Innenkonusflächen 24 der Verriegelungshülse 14 eine automatische Zentrierung, so dass die beiden Elemente - Bolzenbaugruppe 40 und Verriegelungshülse 14-zunächst auch verkantet ineinander geschoben werden können. Durch die besondere Kontur der Konusflächen ergibt sich eine Art Trichterwirkung, die das Zusammenfügen unterstützt und somit den Kraftaufwand für den Fügeprozess reduziert. Gleichzeitig führt die besondere Kontur der Konusflächen zwischen dem Sicherungshohlkörper 41 und der Verriegelungshülse 14 zu einer Art Kraft- und Formschluss, welcher einem Auseinandergleiten der Elemente 14, 40 entgegenwirkt. Die im zusammengefügten Zustand in Anschlag befindlichen Planflächen 20, 46 dienen der Kraftübertragung und stabilisieren die Verbindung, wodurch auch die mittels des Verbindungssystems 10 gefügten Elemente in Ihrer Anordnung stabilisiert werden, was die Systemsteifigkeit eines derart gefügten Gegenstandes erhöht.

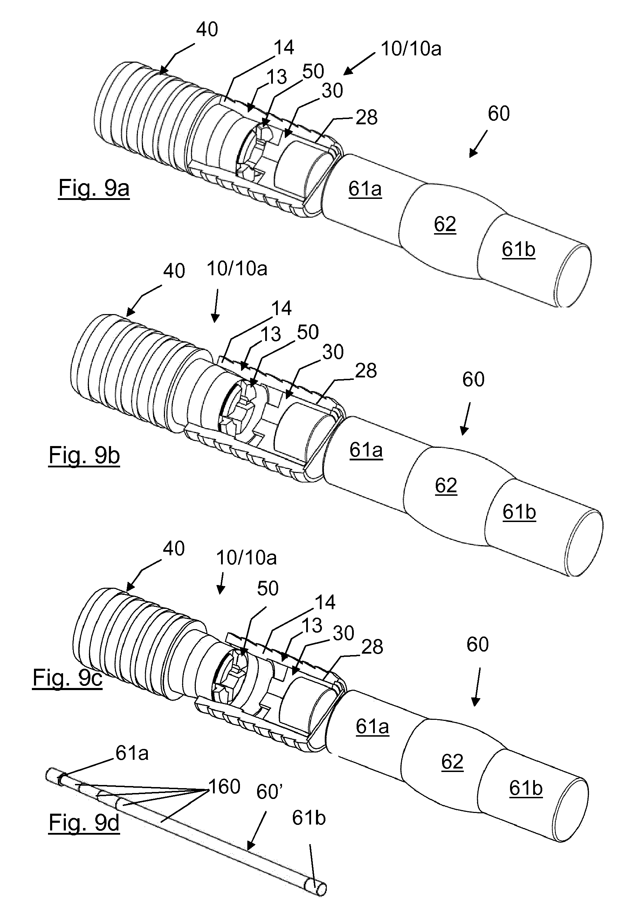

Wie oben bereits angemerkt, ist das Verbindungssystem dazu ausgelegt, das feste aber lösbare Fügen von Einzelsegmenten eines Gegenstandes ohne Zuhilfenahme von Werkzeug zu ermöglichen. Um die Funktionsweise im Einzelnen beispielhaft an der Ausführungsform 10a des Verbindungssystems 10 zu erläutern, sind zwecks der besseren Sichtbarkeit die Einzelsegmente in den Fig. 8a-8f und 9a-8c nicht dargestellt. Aus dem gleichen Grund sind nicht mehr alle Details mit Bezugszeichen versehen, sondern jeweils nur noch die Bolzenbaugruppe 13 bzw. seine Verriegelungshülse 14 mit dem Hülsenkanal 28 und dem darin befindlichen Schaltelement 30 sowie die Bolzenbaugruppe 40 mit dem eingesteckten Sicherungszylinder 50. Die Details sind anhand der vorherigen Figuren eingehend beschrieben worden, weswegen davon ausgegangen wird, dass diese auch ohne Bezugszeichen wiedererkennbar sind.

Beim Fügen zweier Einzelsegmente mittels des erfindungsgemässen Verbindungssystems 10 werden Bolzenbaugruppe 40 und Hülsenbaugruppe 13 zusammengefügt. Hierfür werden diese aufeinanderzu bewegt und die Bolzenbaugruppe 40 wird mit jener Seite, auf welcher die Flansche 57 des Sicherungszylinders 50 an der Stirnseite 44 des Sicherungshohlkörpers 41 anliegen, im folgenden als innere Stirnseite bezeichnet, in die Verriegelungshülse 14 der Hülsenbaugruppe 13 eingeschoben. Die spezielle Form der Aussen- und Innenkonusflächen 45, 24, die dabei ineinander geschoben werden, erlauben anfangs grosse Winkeltoleranzen beim Zusammenfügen der Bauteile (Fig.8a); haben dann aber eine zentrierende, führende Wirkung, so dass Bolzenbaugruppe 40 und Verriegelungshülse 14 schliesslich automatisch in konzentrische Positionen gelangen. In dieser Phase des Fügeprozesses ist das Schaltelement 30 im Hülsenkanal 28 in axialer Richtung freibeweglich.

Je weiter die Bolzenbaugruppe 40 in die Verriegelungshülse 14 der Hülsenbaugruppe 13 eingeschoben wird, umso grösser wird die magnetische Anziehungskraft zwischen dem Magneten 38 im Schaltelement 30 und dem Sicherungszylinder 50 bzw. dem Sicherungshohlkörper 41 aus magnetisierbarem Material. Das Schaltelement 30 wird durch diese magnetische Anziehungskraft in Richtung der Bolzenbaugruppe 40 gezogen, bis es mit seiner Anschlagschulter 36 an der Verriegelungsschulter 26 anliegt (Fig. 8b, 8c).

Wird die Bolzenbaugruppe 40 noch weiter in die Verriegelungshülse 14 geschoben, werden die Federelemente 55 des Sicherungszylinders 50, die ja stirnseitig über die Aussenkonusfläche 45 des Sicherungshohlkörper 41 radial hinausragen, aufgrund der Gestaltung der Innenkonusflächen 24 der Verriegelungshülse 14 im Sicherungshohlkörper 41 immer weiter zusammengedrückt. Da in die zusammengedrückte Sperröffnung 54 der Sicherungszapfen 32 des Schaltelements 30 nicht hineinpasst, wird dieser zusammen mit dem Schaltelement 30 bei einem weiteren Eindringen der Bolzenbaugruppe 40 in die Verriegelungshülse 14 im Hülsenkanal 28 gegen die Hülsenabdeckung 16 geschoben (Fig. 8d). Der Führungskonus 58 an den Flanschen 57 verringert bei diesem Vorgang die Reibung und ermöglicht trotz der sich verjüngenden Durchmesser und des Zusammendrückens der Federelemente 55 ein weiteres Ineinanderschieben von Bolzenbaugruppe 41 und Verriegelungshülse 14 ohne grossen Kraftaufwand.

Im Weiteren Verlauf des Fügeprozesses gelangt die Bolzenbaugruppe 40 schliesslich so tief in die Verriegelungshülse 14, dass die Flansche 57 in einer Art Schnappmechanismus hinter die Verriegelungsschulter 26 in den Hülsenkanal 28 rutschen. Die Federelemente 55 kehren in ihre Ausgangsstellung zurück, da der Durchmesser des Hülsenkanals 28 grösser ist als der Durchmesser der letzten, der Verriegelungsschulter 26 benachbarten Konusfläche und größer als der Aussendurchmesser der Flansche 57. In ihrer Ausgangsstellung hintergreifen die Flansche 57 die Verriegelungsschulter 26 und verhindern mechanisch, dass die Bolzenbaugruppe 40 wieder aus der Verriegelungshülse 14 hinausrutschen kann (Fig. 8e).

Die Innenkonusflächen 24 der Verriegelungshülse 14 liegen jetzt passgenau an den Aussenkonusflächen 45 des Sicherungshohlkörper 41 an und verhindern zusammen mit der Hohlkörperplanfläche 46, welche jetzt mit der Planfläche 20 der Verriegelungshülse 14 in Anschlag gelangt ist, ein Verkanten von Bolzenbaugruppe 40 und Verriegelungshülse 14 gegeneinander - und somit ein Verkanten der mit diesen fest verbundenen Einzelsegmente.

Wenn die Flansche 57 in ihre Ausgangstellung zurückstellen, nimmt die Sperröffnung 54 zwischen den Flanschen 57 wieder ihre normale Grösse bzw. ihren normalen Durchmesser an. Das Schaltelement 30, welches von dem zusammengedrückten Sicherungszylinder 50 gegen die Hülsenabdeckung 16 geschoben worden war, passt nun mit seinem Sicherungszapfen 54 in die nicht mehr zusammengedrückte Sperröffnung 54. Aufgrund der immer noch bestehenden magnetischen Anziehungskraft zwischen dem Magneten 38 im Schaltelement 30 und dem aus magnetisierbarem Material gefertigten Sicherungszylinder 50 bzw. Sicherungshohlkörper 41 wird das Schaltelement 30 mit seinem Sicherungszapfen 32 in die Sperröffnung 54 hineingezogen, bis es mit seiner Anschlagschulter 36 an den Flanschen 57 anschlägt. Durch den Sicherungszapfen 32 in der Sperröffnung 54 sind die Flansche 57 an den Federelementen 55 gegen ein erneutes Zusammendrücken gesichert, wodurch der Schnappmechanismus gegen ein unbeabsichtigtes Lösen gesichert ist.

Dieses Hineinziehen des Sicherungszapfens 32 in die Sperröffnung 54 erfolgt selbsttätig und vollautomatisch, ohne äusseres Zutun. Die Magnetkräfte sind so bemessen, dass das Schaltelement 30 mit hoher Geschwindigkeit bis zum Anschlag gegen den Sicherungszylinder 50 und seine Flansche 57 gezogen wird. Dadurch wird ein gut wahrnehmbares Klicken verursacht, welches das Sichern/Versperren des Verbindungssystems 10 anzeigt.

Da die auf diese Weise erhaltene mechanische Verbindung zwischen Bolzenbaugruppe 40 und Verriegelungshülse 14 lösbar sein soll, ist der Aussendurchmesser der Flansche 57 nur wenig grösser als der Durchmesser, der an die Verriegelungsschulter 26 angrenzenden Innenkonusfläche, so dass die Flansche 57 die Verriegelungsschulter 26 nur entlang eines schmalen, innen umlaufenden Streifens hintergreifen. Mit anderen Worten, die Auflagefläche von Flanschen 57 und Verriegelungsschulter 26 ist nicht sehr gross. Um die Lösbarkeit weiter zu erleichtern, sind die Flansche 57 auf ihrer dem Führungskonus 58 gegenüberliegenden und in dieser Situation der Verriegelungsschulter 26 zugewandten Seite, radial aussen mit Gleitrundungen 59 versehen. Diese Massnahmen führen dazu, dass der Schnappmechanismus mit mässigem Kraftaufwand, händisch überwunden werden kann und die Elemente - Bauteile 40, 13 des Verbindungssystems 10 bzw. mittels des Verbindungssystems 10 zusammengefügte Einzelsegmente 100, 200 - voneinander getrennt werden können. Daher ist es wichtig, diesen Schnappmechanismus gegen eine ungewollte Trennung zu sichern.

Wie bereits gesagt, verhindert der Sicherungszapfen 32 in der Sperröffnung 54, dass die Federelemente 55 mit den Flanschen 57 wieder zusammengedrückt werden können und auf die andere Seite der Verriegelungsschulter 26 und in den Bereich der Innenkonusflächen 24 zurückrutschen können. In einer bevorzugten Ausführungsform ist der Sicherungszapfen sogar leicht konisch ausgebildet mit einem grösseren Aussenradius auf Seite der Anschlagschulter 36. Wird ein solcher, konischer Sicherungszapfen mit genügend grosser magnetischer Anziehungskraft in die Sperröffnung 54 hineingezogen, spreizt er die Federelemente 55 des Sicherungszylinders 50 radial auseinander und verspannt so die Bolzenbaugruppe 40 in der Verriegelungshülse 14, wodurch ein Herausrutschen der Bolzenbaugruppe 40 aus der Verriegelungshülse 14 noch sicherer verhindert wird.

Zusammenfassend kann also gesagt werden, dass das Verbindungssystem 10 so ausgebildet ist, dass beim Fügeprozess, die Bolzenbaugruppe 40 und die Verriegelungshülse 14 mittels eines Schnappmechanismus mechanisch miteinander verbunden werden, wobei der Schnappmechanismus magnetisch gegen eine unbeabsichtigte bzw. ungewollte Trennung gesichert wird.

Um diese magnetisch gesicherte, mechanische Verbindung wieder zu lösen, benötigt man einen Schaltmagneten 60 wie er beispielsweise in den Fig. 9a -09c dargestellt ist. In dem hier gezeigten Beispiel weist der Schaltmagnet 60 einen Nordpol 61a und einen Südpol 61b und einen dazwischen angeordneten Griff 62 auf. Statt eines Griffes 62 kann aber auch ein Teleskop 160 zwischen den Magnetpolen 61a, 61b angeordnet sein, wie dies für den Schaltmagneten 60' in Fig. 9d dargestellt ist. Der Schaltmagnet 60, 60' wird zum Entsperren bzw. Entsichern der mechanischen Verbindung zwischen Bolzenbaugruppe 40 und Hülsenbaugruppe 13 mit einem seiner Pole 61a, 61b auf der Seite des Schaltelements 30 bzw. der Verriegelungshülse 14 der Hülsenbaugruppe 13 in die Nähe des Verbindungssystem 10 gebracht (Fig. 9a).

Die Stärke der Magnetpole 61a, 61b ist so gewählt, dass das Magnetfeld, das sich zwischen dem magnetischen Pol 61a oder 61b des Schaltmagneten 60, 60' und dem Magneten 38 des Schaltelementes 30 aufbaut, stärker ist als das Magnetfeld, welches zwischen der aus magnetisierbaren Material gefertigten Bolzenbaugruppe 40 und dem Magneten 38 des Schaltelementes 30 wirkt. Das Schaltelement 30 wird daher mit seinem Sicherungszapfen 32 aus der Sperröffnung 54 des Sicherungszylinders 50 heraus gegen die Hülsenabdeckung 16 gezogen (Fig. 9a). Die Bewegung des Schaltelements 30 im Hülsenkanal wird durch die Hülsenabdeckung 16 abrupt und sicher gestoppt. Es resultiert ein gut wahrnehmbares Klick-Geräusch, das die Sperrauflösung signalisiert. Die mechanische Verbindung zwischen Bolzenbaugruppe 40 und Hülsenbaugruppe 13 ist nicht mehr gesichert, die Bauteile können mit mässigem Kraftaufwand, auch händisch voneinander getrennt werden.

Bolzenbaugruppe 40 und Hülsenbaugruppe 13 werden dabei auseinander gezogen, wobei die Flansche 57 an den Federelementen 55 mit ihrer Gleitrundung 58 über die Verriegelungsschulter 26 in den Bereich der Innenkonusflächen 24 der Verriegelungshülse 41 gezogen werden müssen. Die Gleitrundungen erleichtern diesen Prozess und verringern ausserdem den Verschleiss bei häufigem Schliessen und Öffnen des Verbindungssystems 10. In diesem Bereich werden die Flansche 57 zunächst wieder zusammengedrückt, was einen entsprechenden Widerstand gegen das Auseinanderziehen erzeugt, weswegen das Auseinanderziehen zu Beginn einen leicht erhöhten Kraftaufwand erfordert. Anschliessend lassen sich die Bolzenbaugruppe 40 und Hülsenbaugruppe 13 aber ohne weiteres voneinander trennen, da die Konusflächen 24, 45 sich ja erweitern und die Flansche 57 an ihren Federelementen 55 frei geben. Auch die auf Reibungskräften basierende und selbsthemmende Keilverbindung zwischen den Konusflächen 24,45 ist dann überwunden, so dass das weitere Trennen ohne Kraft erfolgen kann. Die Konusflächen 24, 45 sorgen während des Auseinanderziehens ausserdem wieder dafür, dass das System unempfindlich gegen ein Verkannten ist.

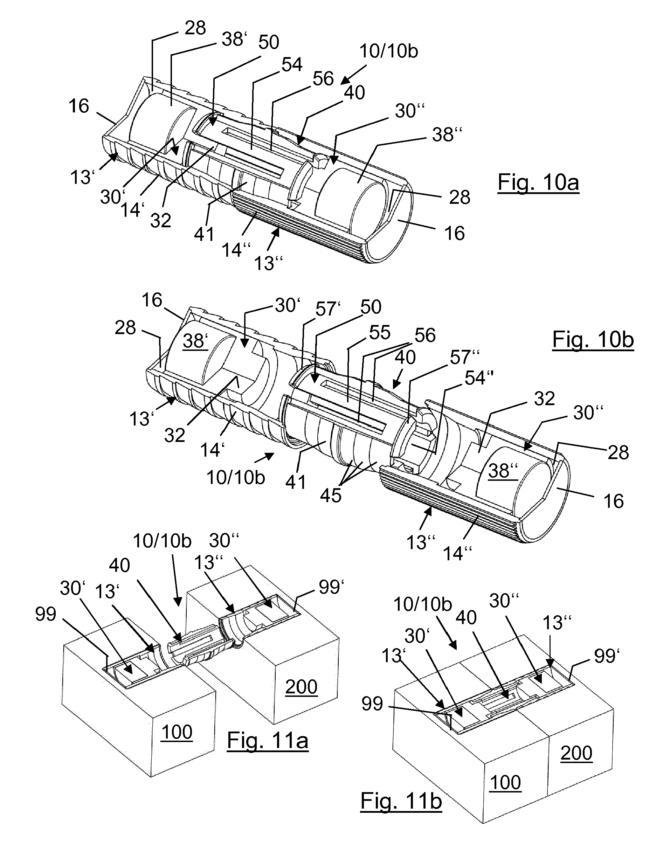

In den Figuren 10a, 10b ist eine zweite Variante 10b des erfindungsgemässen Verbindungssystems 10 gezeigt. Sie unterscheidet sich von der ersten Ausführungsform 10a des Verbindungssystems 10 dadurch, dass die Bolzenbaugruppe 40 auf ihren beiden Stirnseiten jeweils mit einer Hülsenbaugruppe 13', 13" zusammenwirkt. Die Hülsenbaugruppen 13', 13" sind mit je einer Verriegelungshülse 14', 14" und darin angeordnetem Schaltelement 30', 30" mit Magnet 38', 38" gleich aufgebaut, wie die Hülsenbaugruppe 13 aus der oben beschriebenen Variante 10a. Auch die Wirkungsweise ist die gleiche wie bei der Ausführungsform 10a. Die Bolzenbaugruppe 40 ist als eine Art Doppelbolzen aufgebaut. Das bedeutet, sie ist axial betrachtet auf beiden Seiten identisch ausgestaltet und zwar so, wie die oben in der ersten Ausführungsform 10a beschriebene Bolzenbaugruppe auf jener Seite, die mit der Verriegelungshülse 14 zusammenwirkt. Sie besitzt also einen Bolzenhohlkörper 41, der axial betrachtet auf beiden Seiten seiner Mitte Aussenkonusflächen 45 aufweist. In dem Bolzenhohlkörper 41 ist ein durchgehender Sicherungszylinder 50 angeordnet, der auf beiden Seiten Sperröffnungen 54', 54" und an Federelementen 55 angeordnete Flansche 57', 57" aufweist, welche die jeweils stirnseitige Aussenkonusfläche radial nach aussen überragen und mit Gleitrundungen und Führungskonus versehen sind.

Wie in den Fig. 11a, 11b dargestellt werden die beiden Hülsenbaugruppen 13', 13" in Ausnehmungen 99, 99' von Einzelsegmenten 100, 200 fest - z.B. form- oder kraftschlüssig - eingepasst. Die Bolzenbaugruppe 40 greift dann beim Zusammenfügen der beiden Einzelsegmente in die Verriegelungshülsen 14', 14" der beiden Hülsenbaugruppen 13', 13" ein, die sich in den Ausnehmungen 99, 99' befinden. Mit Aufbringen eines entsprechenden Magnetfeldes etwa axial in der Nähe einer Verriegelungshülse 14', 14" kann die Verbindung auf der entsprechenden Seite gelöst werden. Wie aus den Fig. 11a, 11b deutlich erkennbar, ist das Verbindungssystem 10/10b in gefügtem Zustand nicht von aussen sichtbar und die beiden Einzelsegmente 100, 200 sind spaltfrei gefügt.

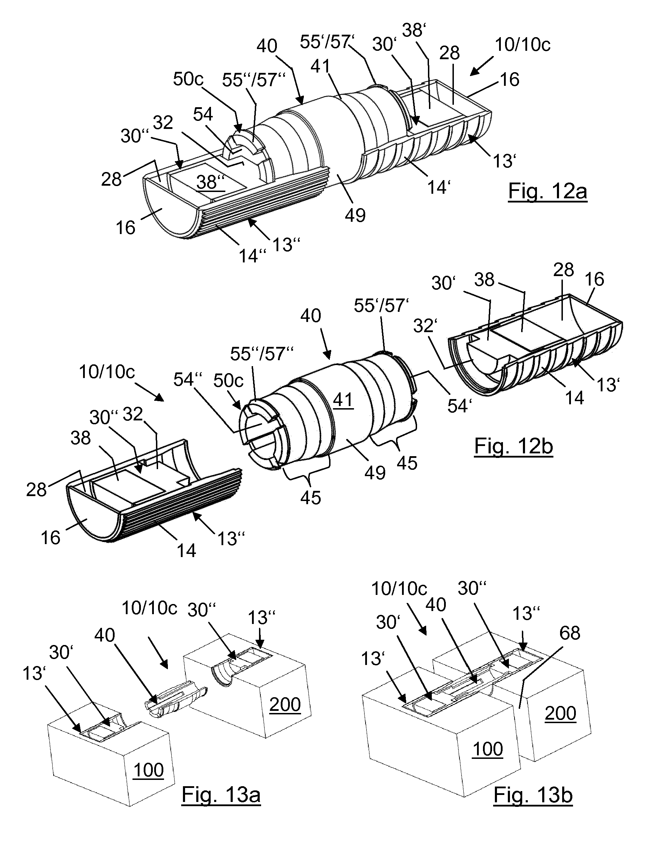

In den Fig. 12a, 12b ist eine weitere Ausführungsform 10c des Verbindungssystems 10 gezeigt, die eine Abwandlung der Variante 10b aus den Fig. 10a, 10b bzw. den Fig. 11a, 11b darstellt. Sie unterscheidet sich von der Variante 10b nur dadurch, dass der Bolzenhohlkörper 41 der Bolzenbaugruppe 40 axial betrachtet in seiner Mitte eine Wulst 49 definierter axialer Ausdehnung aufweist. Der Aussendurchmesser dieser Wulst ist grösser als der Durchmesser der Verriegelungshülsen 14', 14" der Hülsenbaugruppen 13', 13", mit denen die Bolzenbaugruppe 40 zusammenwirkt. Dies führt beim Zusammenfügen dazu, dass zwischen den gefügten Einzelelementen 100, 200 ein Spalt mit definierter Breite bestehen bleibt (siehe Fig. 13a, 13b), wobei die Breite des Spalts der axialen Ausdehnung der Wulst 49 entspricht. Derartige definierte Spalte zwischen Einzelsegmenten werden auch als Schattenfugen 68 bezeichnet.

Der Vorteil der beiden Varianten 10b und 10c des Verbindungssystems 10 ist, dass die zusammenzufügenden Einzelsegmente 100, 200 identische Ausnehmungen 99, 99' aufweisen können, wobei in allen Ausnehmungen 99, 99' identische Hülsenbaugruppen 13', 13" eingepasst sein können. Dies vereinfacht die industrielle Produktion und verhindert beim Transport Beschädigungen, wie sie sonst durch vorstehende Bolzen passieren könnten. Außerdem vereinfacht es das Zusammenfügen für den Laien wesentlich, da für alle Verbindungen funktionsgleiche Bolzenbaugruppen 40 einsetzbar sind. Es gibt keine hervorstehenden Teile und ein Verwechseln der Einbausituation ist damit ausgeschlossen

In den Fig. 14a-14e ist wiederum in perspektivischer Ansicht und Halbschnitt eine vierte Ausführungsform 10d des erfindungsgemässen Verbindungssystems 10 dargestellt. Die Funktionsweise ist prinzipiell wieder dieselbe, nur dass bei dieser Bauform, das Schaltelement 30 in der Bolzenbaugruppe 40 integriert ist. Die Bolzenbaugruppe 40 ist hierfür mit einem Bolzenhohlkörper 41 versehen, der axial anschliessend an den Platz für den Sicherungszylinder 50 einen Hohlraum 78 für das Schaltelement 30 aufweist, wobei dieser Hohlraum 78 nach Einfügen des Schaltelements 30 in den Bolzenhohlkörper 41 mit einer Hohlkörperabdeckung 70 verschlossen wird, so dass das Schaltelement 30 nicht aus dem Bolzenhohlkörper 41 herausfallen kann.

Der Sicherungszylinder 50 ist mittels Schulter 76 im Bolzenhohlkörper 41 am Durchrutschen gehindert. Er ist durchgehend hohl ausgebildet, so dass der Sicherungszapfen 32 des Schaltelements 30 von der den Flanschen 57 gegenüberliegenden Seite zwischen die Federelemente 55 in die Sperröffnung 54 eingreifen und gegen ein Zusammendrücken sichern kann.

Um versenkt eingebaut werden zu können, weist der Bolzenhohlkörper 41 einen Senkflansch 72 auf, der in eine Senköffnung 102 des zu fügenden plattenartigen Einzelsegments 101 hineinpasst (Fig. 14a). Der Bolzenhohlkörper 41 ist wiederum mit Aussenkonusflächen 45 versehen, die mit Innenkonusflächen 24 der zugehörigen Verriegelungshülse 14 zentrierend und gegen Verkantung tolerant zusammenwirken. Die Flansche 57 an den Federelementen 55 des Sicherungszylinders 50 stehen wiederum radial über die Aussenkonusfläche 45 über und werden beim Einführen in die Verriegelungshülse 14 zusammengedrückt. Da die Verriegelungshülse 14 in dieser Ausführungsform 10d kein Schaltelement beherbergen muss, weist diese eine einstückig mit dem Zylindermantel ausgebildeten Hülsenboden 23 auf. Außerdem weist die Verriegelungshülse 14 axial anschliessend an die Innenkonusflächen nur eine Verriegelungsschulter 26 und axial daran anschliessend einen Aufnahmeraum 28' für die Flansche 57 des Sicherungszylinders 50 auf (Fig. 14a), wenn diese im Rahmen des Schnappmechanismus beim Ineinanderschieben von Bolzenbaugruppe 40 und Hülsenbaugruppe 13 ringförmig hinter der Verriegelungsschulter 26 einrasten.

Vorteilhaft ist hier die sehr geringe Bautiefe des Verbindungssystems, die angepasst an Möbelstandards zum Beispiel nur 7mm beträgt. Besonders geeignet ist diese Variante 10d des Verbindungssystems 10 für die Anbindung dünnwandiger und härterer Einbaumaterialien. Fig. 14a zeigt in Sprengansicht die Bolzenbaugruppe 40, das als Platte 101 ausgebildete erste Einzelsegment 100 sowie die in ein zweites Einzelsegment 200 eingepasste Hülsenbaugruppe 13. In den weiteren Fig. 14b bis 14e wurde auf die Darstellung des zweiten Einzelsegments zwecks Übersichtlichkeit verzichtet.

Fig. 14b und 14c zeigen eine Ausgangssituation, bei der beispielsweise eine Metallplatte 101 vor dem zweiten Einzelsegment und der darin montierten Hülsenbaugruppe 13 14 positioniert ist und die Bolzenbaugruppe 40 mit dem Schaltelement 30 dann durch die Senköffnung 102 in die dahinter liegende Hülsenbaugruppe 13 eingeschoben wird.

Fig. 14d zeigt eine Ausgangssituation mit Vormontage der Metallplatte 101 auf Seiten der Bolzenbaugruppe 40 und Fig. 14e, die fertig montierte Fügung. Die Metallplatte 101 kann beispielsweise ein Beschlägesegment sein. Beim einrasten der Bolzenbaugruppe 40 in der Hülsenbaugruppe 13 wird das plattenartige Einzelsegment 100/101 bzw. das Beschlägesegment zwischen der Bolzenbaugruppe 40 und der Verriegelungshülse 14 der Hülsenbaugruppe 13 eingeklemmt und fixiert. Die Bolzenbaugruppe 40 zentriert das jeweilige Beschlägesegment bzw. das jeweilige Einzelsegment 100/101 zur Hülsenbaugruppe 13. Aufgrund der magnetischen Anziehungskräfte wird das Schaltelement 30 wieder automatisch mit seinem Sicherungszapfen 32 in die Sperröffnung des Sicherungszylinders 50 hineingezogen und verspreizt die Federelemente 55 des Sicherungszylinders 50 gegen den Bolzenhohlkörper 41, so dass ein Herausrutschen der Bolzenbaugruppe 40 aus der Verriegelungshülse 14 der Hülsenbaugruppe unmöglich ist. Nur, dass bei dieser Variante 10d das Schaltelement 30 mit seinem Sicherungszapfen 32 von der anderen, den Flanschen 57 gegenüberliegenden Seite in den Sicherungszylinder 50 hineingezogen wird.

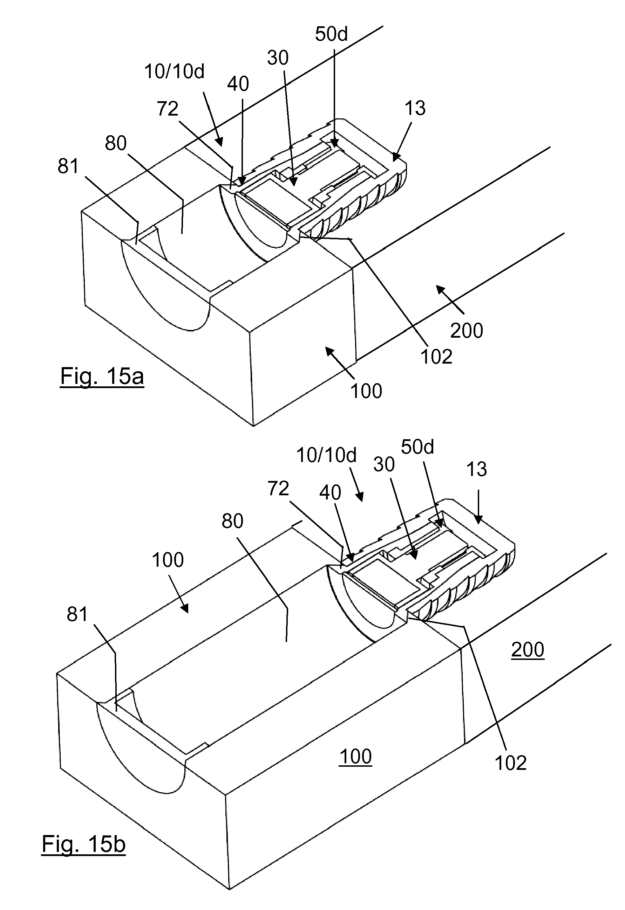

In den Fig. 15a, 15b ist die gleiche Ausführungsform 10d des Verbindungssystems 10 gezeigt, allerdings in einer Fügesituation mit Fügung von dickeren Materialien mit versenktem Einbau. Hülsenbaugruppe 13 und Bolzenbaugruppe 40 werden jeweils vormontiert, wobei die Bolzenbaugruppe 40 in eine tiefe Zugangsöffnung 80 eingesetzt und an deren Grund mittels des Senkflansches 72 in einer Senköffnung 102 gehalten wird. Die Zugangsöffnung 80 kann mit einem Schutzdeckel 82 verschlossen werden, was aber nicht zwingend sein muss.

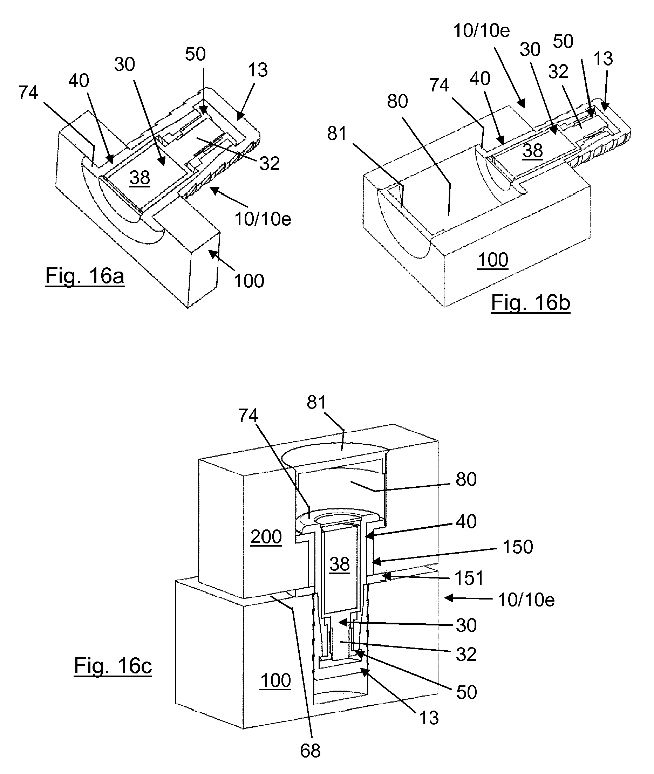

Eine Variante 10e des Verbindungssystems 10, wie sie in den Fig. 16a bis 16c dargestellt ist, unterscheidet sich dadurch von derjenigen aus den Fig. 14 und 15, dass statt eines Senkflansches ein aufliegender Flansch 74 vorgesehen ist, was vorteilhaft ist bei weicheren Materialien, wie z.B. Kunststoffen. Die materialdicke ist variabel; ebenso die Einbauart, offen (Fig. 16a) oder verdeckt (Fig. 16b, 16c) ohne Schattenfuge (Fig. 16a, 16b) oder mit Schattenfuge 68 (Fig. 16c). Für die Bildung der Schattenfuge 68 sind eine Distanzscheibe 151 und eine zugehörige Distanzhülse 150 vorgesehen.

Es können ganz verschiedene Elemente des Verbindungssystems 10 mit fugenbildenden Mitteln ausgestattet sein, die dazu dienen Schattenfugen 68 mit definierter Spaltbreite/Fugenbreite zwischen den Einzelsegmenten zu kreieren. Solche fugenbildenden Mittel sind beispielsweise der Wulst 49 der Bolzenbaugruppe 40 in der dritten Ausführungsform 10c, in Fig. 12a, 12b oder in der fünften Ausführungsform 10e, in Fig. 16c die zwischen den Einzelsegmenten 100, 200 liegende Distanzscheibe 151. Die fugenbildenden Mittel aber auch aufliegende Flansche 74 oder versenkte Flansche 72, wie sie in den Fig. 15a, 15b und 16a, 16b gezeigt sind, können bei Bedarf vorteilhaft aus semi-transparentem oder transparentem Material wie beispielsweise Acryl gefertigt sein, damit sie möglichst nicht sichtbar sind. Für Dekorationszwecke können sie aber natürlich auch aus anderem Material sein, das sich evtl. sogar kontrastreich abhebt von den Einzelsegmenten 100, 200.

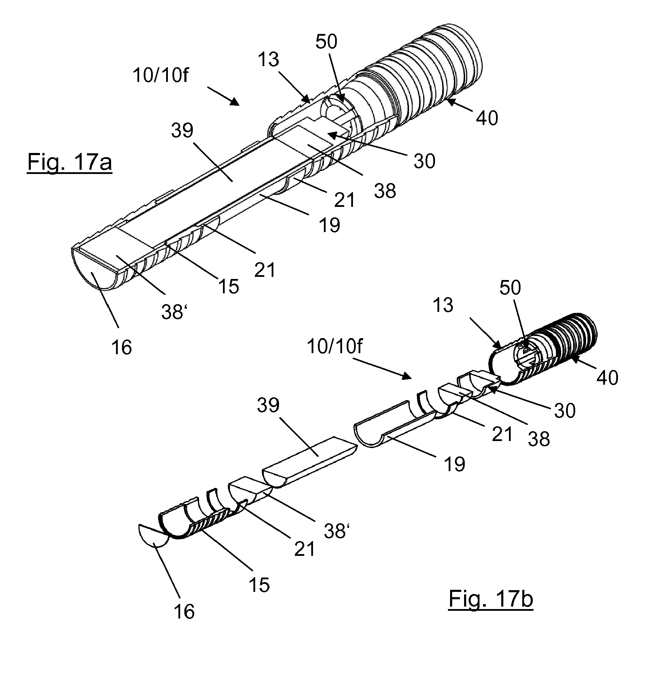

Fig. 17a zeigt in Schnittansicht, perspektivisch und Fig. 17b in teilweiser Sprengansicht, perspektivisch eine Variante 10f zur ersten Ausführungsform des Verbindungssystems 10, bekannt aus den Fig. 1 bis 9c mit einer Variante der Hülsenbaugruppe. Um grössere Einbautiefen zu ermöglichen ohne die Zugänglichkeit des Schaltmechanismus 30 für das Lösen der Sperre des Schnappmechanismus zu gefährden, ist in dieser Ausführungsform der Hülsenkanal 28 in der Verriegelungshülse 14 der Hülsenbaugruppe 13 durch einen Tubus 19 verlängert. Der Tubus 19 weist an seinen beiden Enden je einen Kantenschutzring 21 auf. Ein Übertragungselement 39 im Tubus 19 verbindet magnetisch den Magneten 38 des Schaltelements 30 mit einem weiteren Magneten 38' am anderen Ende des Tubus 19. Eine von aussen aufgebrachte magnetische Kraft wird mittels des Übertragungselements 39 ohne weiteres bis zum Schaltelement 30 übertragen, so dass auch über grosse Distanzen die Sperre des Schnappmechanismus gelöst werden kann. Der weitere Magnet 38' am anderen Ende des Tubus 19 ist in einem weiteren Hülsenkörper 15 untergebracht, der über einen Kantenschutzring mit dem Tubus 19 verbunden ist. Die Kantenschutzringe 21 zentrieren den Tubus 19 in den Ausnehmungen der jeweils unterschiedlichen Einzelsegmente und können auch einen Versatz zwischen den Ausnehmungen der Einzelsegmente ausgleichen, bzw. zueinander zentrieren. Die Kantenschutzringe 21, 21' schützen die Kanten der Einzelsegmente vor Beschädigungen. Die einfache Konstruktion mit Hülsenkanal 28, Kantenschutzring 21, Tubus 19, zweitem Kantenschutzring 21 und Hülsenkörper 15 sowie Schaltelement 30 mit Magnet 38, Übertragungselement 39 und weiterem Magnet 38' ermöglicht unter anderem auch eine individuelle Längenanpassungen durch die Verwendung von Stangenmaterialien unterschiedlicher Länge sowohl für den Tubus 19 als auch das Übertragungselement 39.

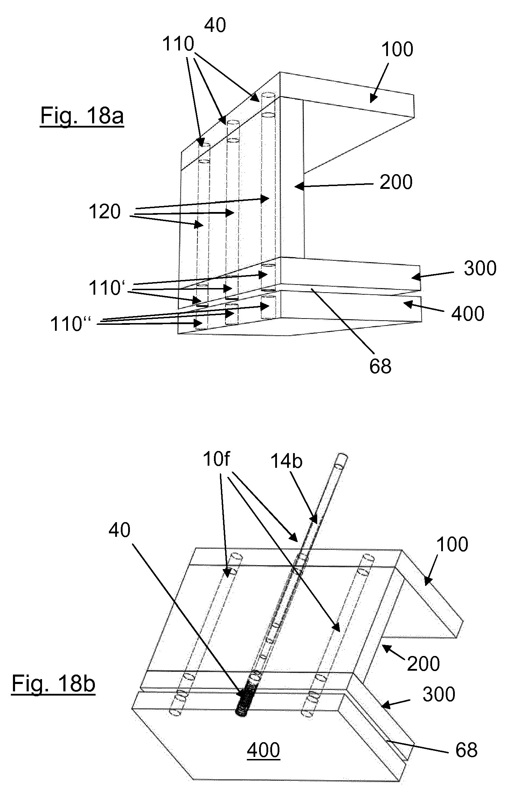

Fig. 18a und 18b zeigen eine Fügesituation, in der eine solche Variante 10f des Verbindungssystems 10 zum Einsatz kommt oder aber ein Schaltmagnet 60', wie er in Fig. 9d dargestellt ist.

Zwei flächig aufeinander liegende, plattenartige Einzelsegmente 300, 400 werden via Randeckverbindung mit einem senkrecht darauf stehenden, plattenartigen Einzelsegment 200 mit einem zu ihnen parallelen Einzelsegment 100 verbunden. Hierzu weisen die plattenartigen Einzelsegmente 100, 300, 400 senkrecht zu ihrer Flächenausdehnung ausgerichtete, durchgehende Öffnungen 110, 110', 110" auf, während das plattenartige Einzelsegment 200 in Flächenausdehnung ausgerichtete, durchgehende Kanäle 120 aufweist. In den Ausnehmungen 110" des Einzelsegments 400 befinden sich beispielsweise Bolzenbaugruppen 40. Für eine feste Verbindung aller Einzelsegmente miteinander können durch die Ausnehmungen 110, 110' und die Kanäle 120 langgestreckte Hülsenbaugruppen 13, wie sie aus den Fig. 17a, 17b bekannt sind, eingesetzt sein. Es können aber auch nur die Einzelsegmente 300, 400 durch ein Verbindungssystem 10, wie es aus den Fig. 1-9 bekannt ist, miteinander verbunden sein. Zum Lösen der Verbindung kann dann das Schaltelement im Verbindungssystem mittels eines Teleskopschaltmagneten 60', wie er aus Fig. 9d bekannt ist, bewegt werden. Den Teleskopschaltmagneten 60' kann man dann durch die Ausnehmungen 110 und die mit diesen fluchtenden Kanäle 120 bis zum Verbindungssystem führen und so eine magnetische Kraft von aussen auf das Schaltelement mit seinem Magneten aufbringen um die Verbindung zu entsperren.

Eine Fernschaltfunktion für die Entsperrung des Systems an unzugänglichen Stellen erfolgt also direkt oder indirekt. Die indirekte Variante schafft durch rohrartige Kanäle 120 oder Hohlräume 110 einen Zugang zum Schaltelement 30 und kann u.a. mit dem Teleskopschaltmagnet 60' betätigt werden. Der Schaltkanal kann durch eine Abdeckung oder eine Verblendung geschlossen werden. Bei der direkten Variante werden die rohrartigen Kanäle 120 oder Hohlräume durch die verlängerte Verriegelungshülse 14, wie sie in den Fig. 17a, 17b gezeigt ist ausgefüllt. Mit diesen Varianten der Verriegelungshülse 14 bzw. des Schaltmagneten 60' lassen sich alle Einschränkungen bezüglich der Zugänglichkeit des Schaltmechanismus zum Entsperren der mechanischen Schnappverbindung eliminieren und eine hohe Flexibilität bzgl. der Fügesituationen erreichen.

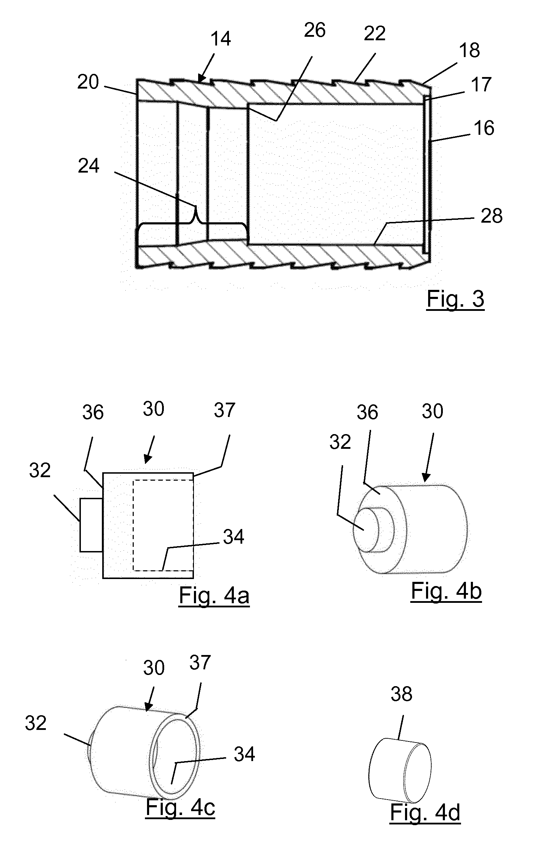

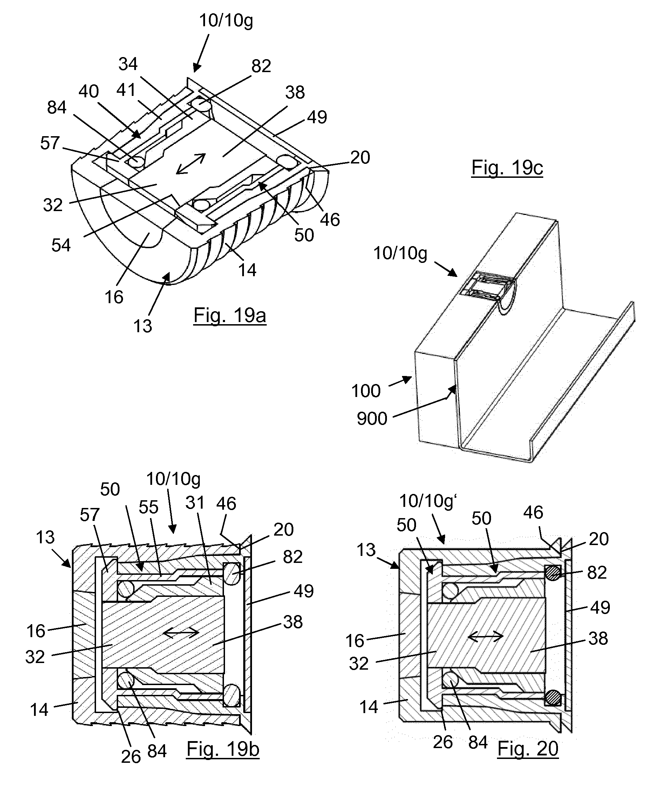

In den Fig. 19a-19c ist eine Variante 10g zur vierten Ausführungsform 10d des Verbindungssystems 10, das in den Fig. 14a bis 14e gezeigt ist, sowie ein Verwendungsbeispiel für diese Variante 10g dargestellt. Die Variante 10g weist eine Hülsenbaugruppe 13 bzw. Verriegelungshülse 14 auf, die abgesehen von der hier vorhandenen Hülsenabdeckung 16 derjenigen aus der Variante 10d aus den Fig. 14a-e entspricht. In der Bolzenbaugruppe 40 sind wiederum Sicherungszylinder 50 und Schaltelement 30 untergebracht, wobei hier das Schaltelement 30 allerdings mit seiner Magnethülse 34 in den Sicherungszylinder 50 eingeschoben und im Sicherungszylinder 50 fixiert ist. Im Gegensatz zum Schaltelement, wie es in den Fig. 4a-4d dargestellt ist, weist in dem hier gezeigten Beispiel der Magnet 38 den Sicherungszapfen 32 auf und ist innerhalb der Magnethülse 30 derart gelagert, dass der Magnet 38 mit dem Sicherungszapfen 32 sperrend in die Sperröffnung 54 zwischen die Flansche 57 des Sicherungszylinders 50 und wieder heraus bewegbar ist. Eine Ausführungsform des Schaltelements 30, wie es in den Fig. 4a-4d dargestellt ist, ist aber ebenso denkbar. Das Schaltelement 30 mit der Magnethülse 34 und dem Magneten 38 sind mittels eines Zentrierrings 84 im Sicherungszylinder 50 zentriert, so dass die Bewegung in axialer Richtung sicher zu einer Bewegung des Sicherungszapfens 32 in die Sperröffnung 54 und aus ihr heraus führt. Auf der dem Sicherungszapfen 32 gegenüberliegenden Seite ist der Bolzenhohlkörper 41 mittels einer Hohlkörperabdeckung 49 verschlossen und das Schaltelement 30 bzw. der Magnet 38 mit dem Sicherungszapfen 32 gegen ein Herausfallen gesichert. Auf der dem Sicherungszapfen 32 gegenüberliegenden Seite sind je nachdem, ob der Magnet 38 sich im Schaltelement 30 bewegt (Fig. 19a, 19b) oder der Magnet im Schaltelement 30 fixiert ist und mit diesem zusammen bewegt wird, nur der Sicherungszylinder 50 (Fig. 20) oder der Sicherungszylinder 50 und die Magnethülse 34 des Schaltelements 30 mittels eines Federrings 82 gegen die Hohlkörperabdeckung 49 abgestützt.

Die Aussenkontur der Verriegelungshülse 14 kann strukturiert bzw. rau sein, wie in den Fig. 19a, 19b angedeutet, oder aber glatt wie anhand der Ausführungsform 10g' in Fig. 20 gezeigt. Die Einbautiefe ist auch hier sehr gering und liegt im Bereich von 6mm bis 8mm.

In Fig. 19c ist die Montage eines plattenartigen, als Griff ausgeformten Beschlagelements 900 an einer Schubladenfront dargestellt, wobei die Schubladenfront das Einzelsegment 100 darstellt. Die Verbindung zwischen Schubladenfront und Beschlagelement 900 ist mittels des Verbindungssystems 10g, wie es in den Fig. 19a, 19b gezeigt ist, realisiert.

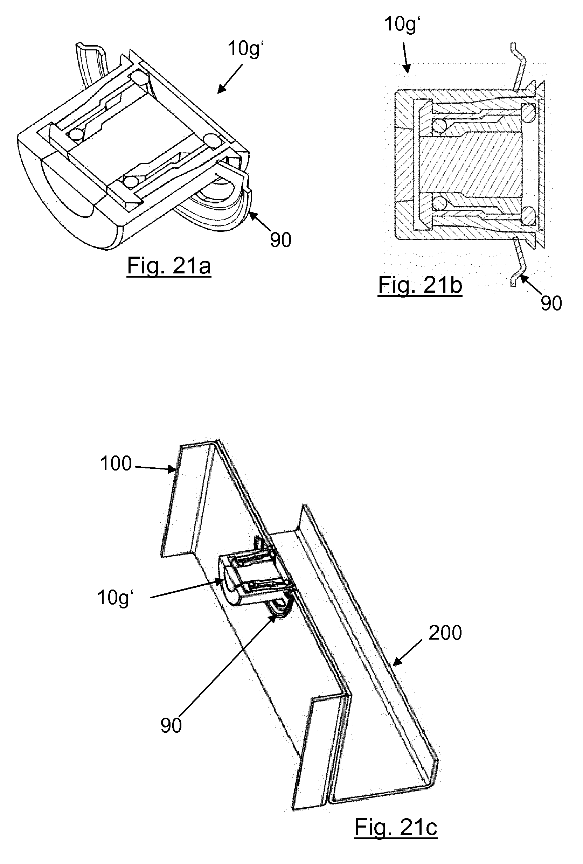

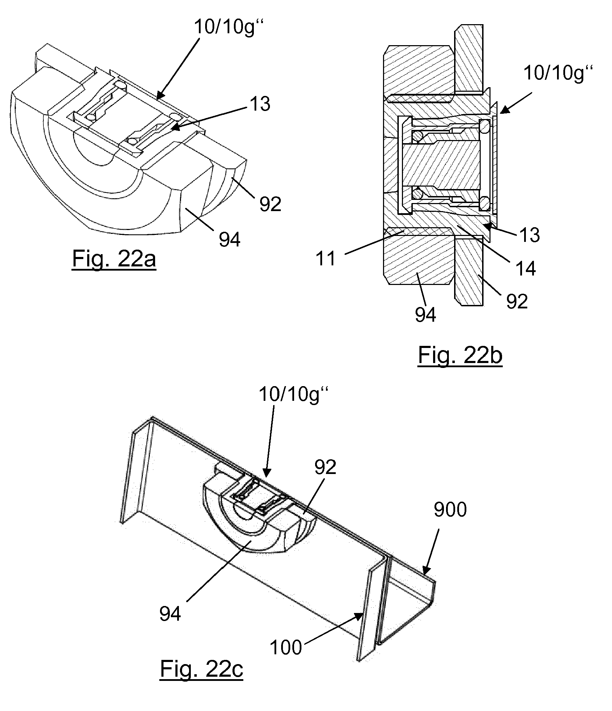

In den Fig. 21a bis c ist eine Verwendung der in Fig. 20 dargestellten Variante 10g' des Verbindungssystems 10 zusammen mit einem Klemmring 90 (auch Zackenring genannt) gezeigt. In den Fig. 22a bis 22c ist eine Verwendung mit Mutter 94 und Unterlegscheibe 92 mit einer weiteren Variante 10g" des Verbindungssystems 10 gezeigt. Wie zu erkennen ist, weist in dieser Variante 10g" die Verriegelungshülse 14 der Hülsenbaugruppe aussen ein Gewinde 11 auf, um mit der Mutter 94 zusammenwirken zu können.

Wie in diesen Beispielen gezeigt, eignen sich die Variante 10g und insbesondere die Varianten 10g' bzw. 10g" des Verbindungssystems 10 besonders dafür zwei dünne, plattenartige Einzelsegmente miteinander zu verbinden. Die Einzelsegmente 100, 900 können dabei auch Segmente mit sehr geringer Materialdicke nämlich zum Beispiel bis hinunter zu Dicken von nur noch 0.5mm miteinander verbunden werden, insbesondere wenn diese entsprechend steif sind, wie beispielsweise wenn sie aus Stahlblech gefertigt sind.

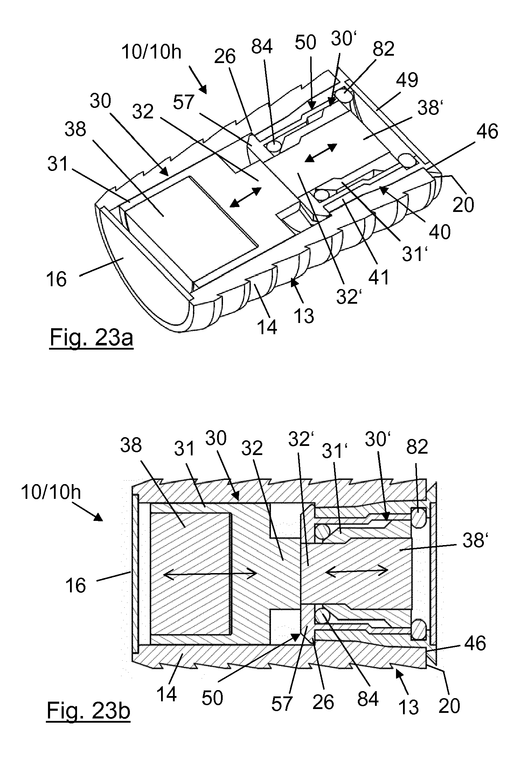

In den Fig. 23a, 23b ist eine weitere Variante 10h des Verbindungssystems 10 gezeigt, in der eine Verriegelungshülse 14 mit Schaltelement 30, wie sie in den Fig. 2,3, 4a-4d, gezeigt ist, mit einer Bolzenbaugruppe 40 kombiniert ist, wie sie aus den Fig. 19a, 19b, 20 bekannt ist.

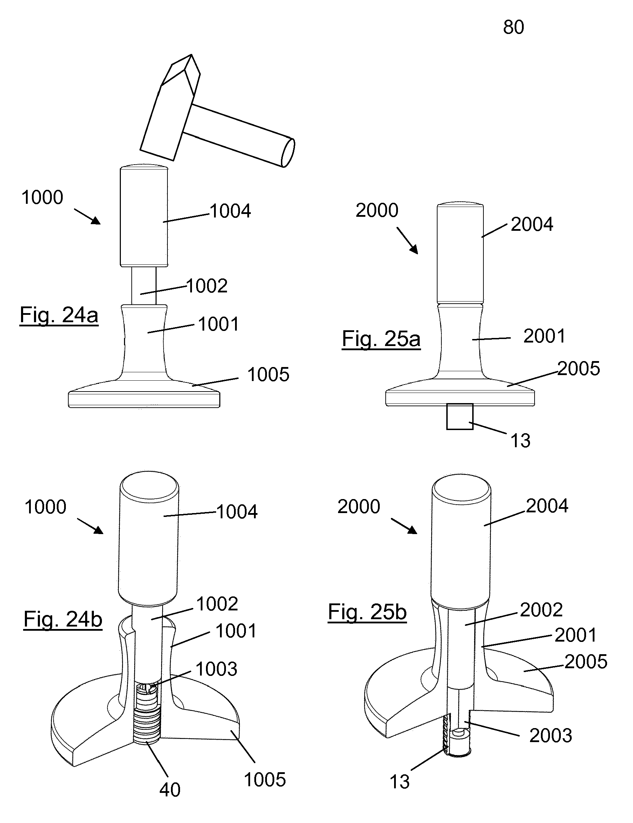

In den Fig. 24a, 24b ist ein Werkzeug 1000 für das händische Einsetzen bzw. Einpressen einer Bolzenbaugruppe 40 in eine Ausnehmung eines Einzelsegments dargestellt. In den Fig. 25a, 25b ein entsprechendes Werkzeug 2000 für das händische Einsetzen bzw. Einpressen einer Verriegelungshülse 14 einer Hülsenbaugruppe 13. Die Werkzeuge 1000, 2000 weisen einen hohlzylindrischen Körper 1001, 2001 auf, in den ein Stempel 1002, 2002 einsetzbar ist. Der Stempel 1002, 2002 ist an seiner in den hohlzylindrischen Körper 1001, 2001 einführbaren Seite mit einer an die Bolzenbaugruppe 40 bzw. Verriegelungshülse 14 angepassten Spitze 1003, 2003 versehen; auf der anderen Seite mit einem Griff 1004, 2004, der vorteilhaft je nach Spitze und also Verwendungszweck eine andere Farbe aufweist, um Verwechslungen vorzubeugen. Der Griff 1004, 2004 weist einen Durchmesser auf, der grösser ist als der Innendurchmesser des hohlzylindrischen Körpers 1001, 1002, so dass der Stempel nur bis zu einer definierten Tiefe in den Körper 1001, 2001 eingeschlagen werden kann, wobei der Bewegungsweg des Stempels der Länge der Bolzenbaugruppe 40 bzw. Verriegelungshülse 14 entspricht. Auf diese Weise ist sicher gestellt, dass die Elemente 40, 13 des Verbindungssystems mittels des Werkzeugs 1000, 2000 auch per Hand immer so in die Ausnehmungen eines Einzelsegments eingepasst werden, dass der Schnappmechanismus beim Zusammenfügen auch greift. Ein breiter Aufsetzteller 1005, 2005 sorgt für ein sicheres ebenes platzieren des Werkzeugs auf dem Einzelsegment und über der Ausnehmung, in welche die Bolzenbaugruppe 40 bzw. Verriegelungshülse 14 eingesetzt werden soll. Ein verkantetes Einsetzen/Einpressen kann mit diesem Werkzeug sicher verhindert werden.

Fig. 26a zeigt in Schnittansicht als Prinzipskizze zwei zu fügende Einzelsegmente 100 und 200 mit je zwei Ausnehmungen 99, 99'. Bei gewünschter Platzierung der Einzelsegmente 100, 200 sind die Ausnehmungen 99, 99' passgenau einander vis à vis angeordnet. Sie dienen der Aufnahme Bolzenbaugruppen und Verriegelungshülsen, die dadurch vor dem Fügen einander vis à vis liegenden. Die Fig. 26b und 26c zeigen zwei unterschiedliche, prinzipielle Füge-Möglichkeiten bzgl. des resultierenden Spalts zwischen zwei gefügten Segmenten. Fig. 26b) zeigt eine Fügung ohne Spalt/bzw. definierter Fuge zwischen den Segmenten 100, 200 und Fig. 26c) eine Fügung mit definiertem Spalt bzw. Fuge definierter Dicke, der/die auch als Schattenfuge 68 bezeichnet wird. Prinzipiell sind diese beiden Füge-Arten: Fügen mit Schattenfuge und Fügen ohne Schattenfuge 68 mittels des erfindungsgemässen Verbindungssystems bzw. mittels mindestens einer seiner Ausführungsformen realisierbar.

In den Figuren 27 bis 31 sind jeweils zwei Möbelplatten dargestellt, welche jeweils das erste Einzelsegment 100 und das zweite Einzelsegment 200 bilden und welche zusammengefügt werden sollen zu einem zusammengesetzten Möbelteil. Am Beispiel dieser zwei Möbelplatten 100, 200 sind unterschiedliche Füge-Möglichkeiten bezüglich der Anordnung der zu fügenden Einzelsegmente zueinander dargestellt, welche mit dem erfindungsgemässen Verbindungssystem 10 bzw. mindestens mit einer seiner Ausführungsformen realisierbar sind. Hierzu sind die Anordnungen jeweils unter a) perspektivisch und fertig gefügt gezeigt. Jeweils unter b) bis c) sind die Elemente 100, 200 in Seitenansicht gezeigt, wobei sie unter b) vor dem Fügen gezeigt sind, unter c) fertig gefügt ohne Schattenfuge und unter d) fertig gefügt mit Schattenfuge gezeigt sind.

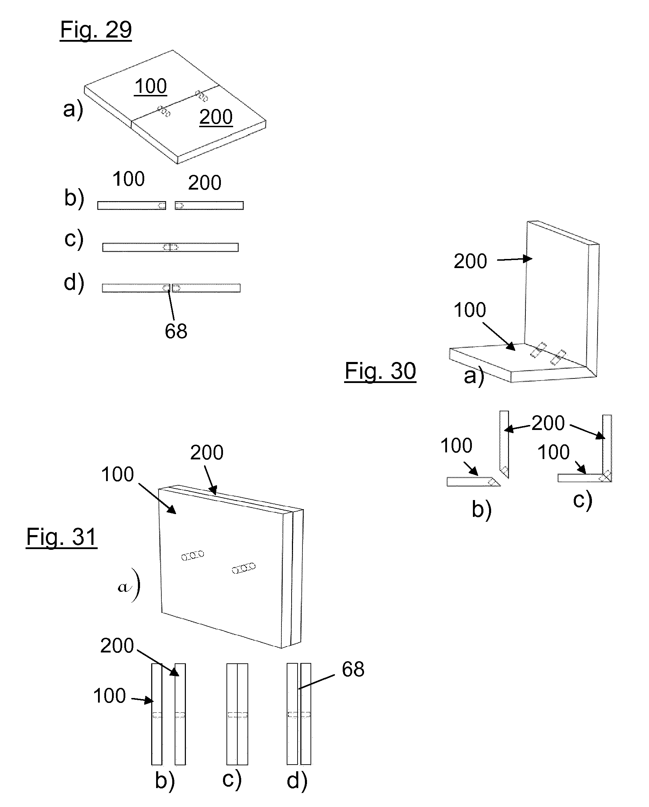

Fig. 27a) bis d) zeigt entsprechend einen aussenseitigen Eckverbund; Fig. 28a) bis d) einen mittelseitigen Eckverbund; Fig. 30a) bis c) einen Eckverbund via Gehrung; Fig. 29a) bis d) einen Materialverbund über Kante bzw. Stirnseite; und Fig. 31a) bis d) einen Materialverbund via Fläche.

Die Einzelsegmente bzw. Möbelplatten 100, 200 in diesen Beispielen 27 bis 31 weisen jeweils an ihren Verbindungsfläche zwei Ausnehmungen auf (angedeutet mit gestrichelten Linien), die beispielsweise in einem für Möbel üblichen Raster angeordnet sind und haben einen kreisförmigen Querschnitt mit einem für Möbel üblichen Durchmesser. Aufgrund der gerasterten Anordnung der Ausnehmungen werden bei gewünschter Platzierung der Möbelplatten zueinander die Ausnehmungen automatisch in Deckung gebracht, so dass sie in Endstellung miteinander fluchten. Darin z.B. durch Schrauben, Kleben oder Spreizen fixierte Elemente des Verbindungssystems, wie Bolzenbaugruppen und Verriegelungshülsen (nicht dargestellt) können also beim platzieren der Möbelplatten ineinandergreifen und ihre verbindende Wirkung entfalten. Wie oben beschrieben wirken die ineinander greifenden Konusflächen der Bolzenbaugruppen und der Verriegelungshülsen wie eine automatische Zentrierung und es wird ein schnelles Fassen und Fixieren der Verbindung zwischen den Einzelsegmenten/Möbelplatten 100, 200 gewährleistet. Diese Wirkung wird noch verstärkt durch die magnetischen Kräfte die beim Zusammenfügen beginnen eine anziehende Wirkung zu entfalten. Der Fügeprozess ist dadurch einfach und unkompliziert und auch für Laien ausführbar.

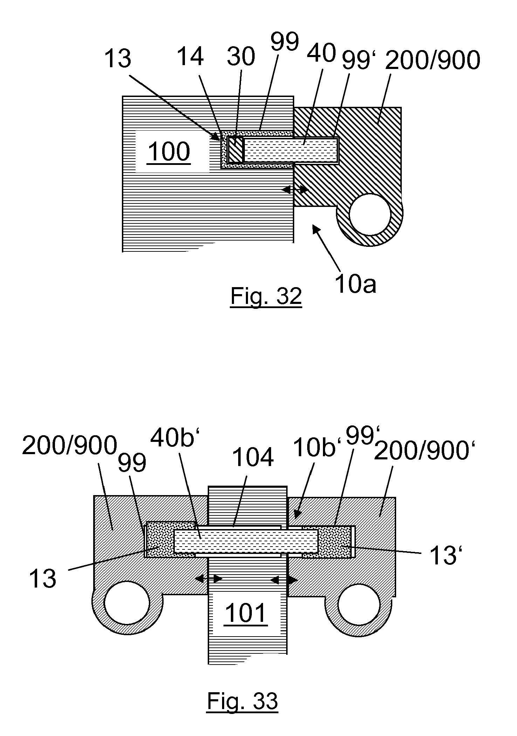

Figur 32 zeigt eine Ausführungsform eines erfindungsgemässen Verbindungssystems 10a (vgl. auch Fig. 1 bis 8f), welches in diesem Beispiel eingesetzt ist, um ein als Balken ausgebildeten erstes Einzelsegment 100 und ein als Beschlag 900 ausgeführtes, zweites Einzelsegment 200 fest aber lösbar zusammenzufügen. Der Beschlag 900, der beispielsweise ein Teil eines Scharniers ist, ist mit einer Ausnehmung 99' versehen, in welcher in diesem Beispiel eine Bolzenbaugruppe 40 fixiert ist, zum Beispiel mittels einer Presspassung. Das als Balken ausgebildete erste Einzelsegment 100, beispielsweise ein Türpfosten, weist ebenfalls eine Ausnehmung 99 auf, in welcher in diesem Beispiel eine Hülsenbaugruppe 13 mit einer Verriegelungshülse 14 und einem Schaltelement 30 fixiert ist, beispielsweise ebenfalls mittels Presspassung oder mittels einer Klebeverbindung. Werden Beschlag 900 und Türpfosten 100 zusammengefügt, greift die Bolzenbaugruppe 40 in die Verriegelungshülse 14 ein und der Sicherungszylinder wirkt wie oben beschrieben mit der Verriegelungsschulter der Verriegelungshülse in der Art eines mechanischen Schnappmechanismus zusammen und rastet dort mechanisch ein. Das Schaltelement 30 in der Verriegelungshülse wird aufgrund der magnetischen Wechselwirkung zwischen dem Magneten im Schaltelement und dem magnetisierbaren Material des Sicherungszylinders mit seinem Sicherungszapfen in die Sperröffnung des Sicherungszylinders gezogen und sichert bzw. sperrt diesen, so dass die Verbindung nur noch mit Hilfe eines äusseren Magnetfeldes wieder gelöst werden kann.

In Figur 33 sind zwei Beschläge 900, 900' auf einander gegenüberliegenden Seiten eines plattenförmigen Einzelsegments 101 fixiert, wobei die Beschläge 900, 900' und das plattenförmige Einzelsegment 101 mit Hilfe einer Variante 10b' der Ausführungsform des Verbindungssystems 10b, wie es in den Figuren 10a, 10b (Doppelbolzen) gezeigt ist, fest aber lösbar miteinander verbunden sind. Das plattenförmige Einzelsegment 101 weist eine durchgehende Öffnung 104 auf, die beiden Beschläge 900, 900' jeweils eine Ausnehmung 99, 99' in welchen je eine Verriegelungshülse 14 unlösbar eingesetzt ist. Eine Bolzenbaugruppe 40b' ist durch die durchgehende Öffnung 104 des plattenförmigen Einzelsegments 101 hindurchgesteckt. Diese Bolzenbaugruppe 40b' ist aufgebaut wie die Bolzenbaugruppe 40b aus den Fig. 10a, 10b, ist aber verglichen mit dieser länger, genau genommen so lang bemessen, dass sie durch die durchgehende Öffnung 104 passt und auf beiden Seiten über diese so weit hinausragt, dass der beschriebene Schnappmechanismus funktioniert. Das Verbinden der Einzelsegmente 900, 101, 900' erfolgt in gleicher Weise wie bereits oben für die Fig. 32 beschrieben nur diesmal auf zwei Seiten, nämlich auf jeder der beiden einander gegenüberliegenden Seiten des plattenförmigen Einzelsegments 101.

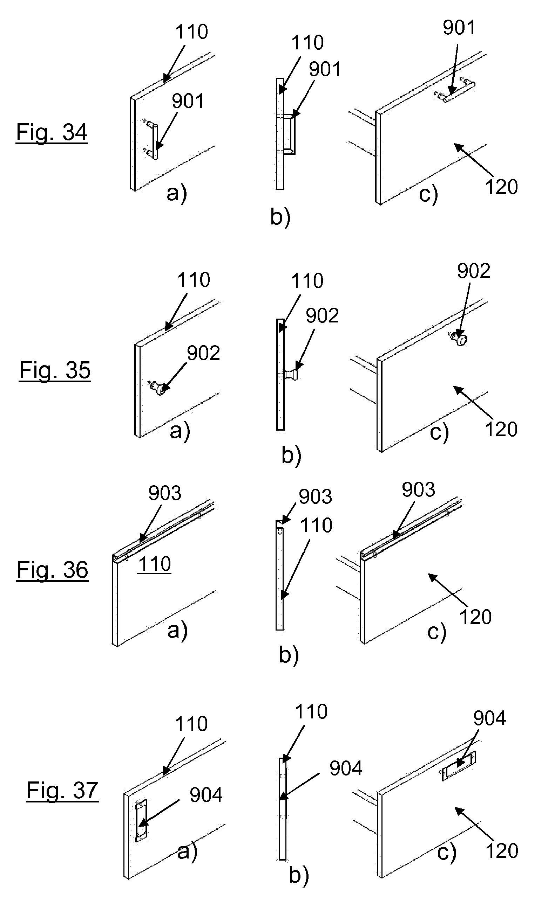

In den Fig. 34 bis 37 sind perspektivisch (jeweils Abbildungen a und c) bzw. in Seitenansicht (jeweils Abbildung b) unterschiedliche Verwendungsbeispiele für das erfindungsgemässe Verbindungssystem 10 gezeigt, bei denen wenigstens ein zu fügendes Segment ein Beschlag ist und das andere zu fügende Segment ein Möbelsegment. Fig. 34a, 34b zeigt eine Schranktür 110 mit einem Möbelgriff 901, Fig. 34c eine Schublade 120 mit demselben Möbelgriff 901. Fig. 35a, 35b zeigt eine Schranktür 110 mit einem Möbelknopf 902, Fig. 35c eine Schublade 120 mit einem Möbelknopf 902. Fig. 36a, 36b zeigt eine Schranktür 110 mit einer Griffleiste 903, Fig. 36c eine Schublade 120mit einer Griffleiste 903. Fig. 37a, 37b zeigt eine Schranktür 110 mit einer Griffschale 904, Fig. 37c eine Schublade 120 mit einer Griffschale 904.

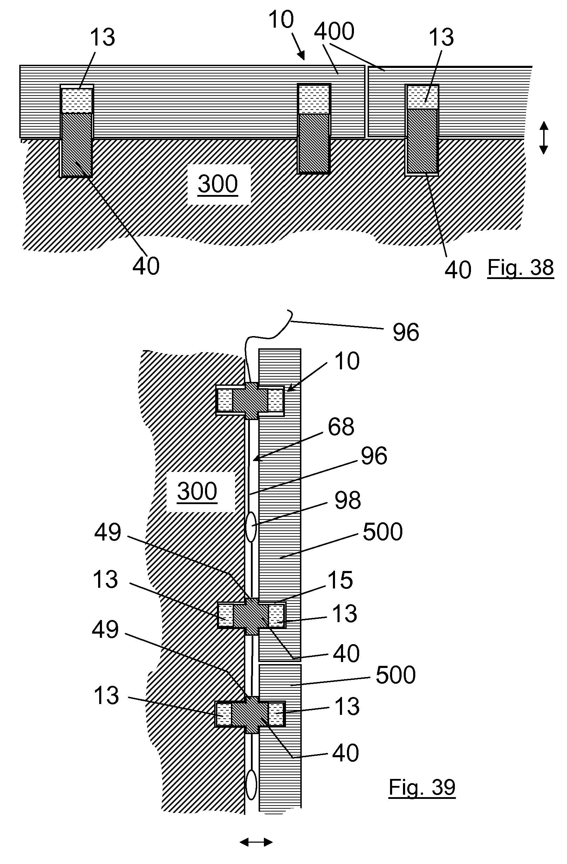

In Figur 38 ist in einer Prinzipskizze ein weiteres Beispiel für eine Verwendung eines erfindungsgemässen Verbindungssystems 10 dargestellt, nämlich das feste aber lösbare Fügen von Bodenplatten 400 als erste Einzelsegmente mit einem Untergrund 300 als zweitem Einzelsegment zu einem Bodenbelag. Der Untergrund 300 kann beispielsweise ein Zement- oder Betonboden eines Hauses sein. Die Bodenplatten 400 können aus Holz (Dielen, Planken, Parkettelemente etc.), Keramik (Fliesen, Terrakottaplatten, etc.) oder Stein, insbesondere Marmor sein. Das Verbindungssystem 10 weist wiederum Verriegelungshülsen 14 und Bolzenbaugruppen 40 auf, die jeweils eine magnetisch gesicherte, mechanische Schnappverbindung miteinander eingehen. Verriegelungshülsen 14 und Bolzenbaugruppen 40 sind in Ausnehmungen des Untergrunds 300 bzw. der Bodenplatten 400 fixiert, wobei die Ausnehmungen in ihrer Anordnung aufeinander abgestimmt sind und zur Deckung gebracht werden können.

In Figur 39 ist ebenfalls ein Untergrund 300 als erstes Einzelsegment dargestellt, der hier aus Holz oder Kunststoff oder Beton oder ähnlichem Material ist und beispielsweise eine Zimmer- oder Häuserwand ist oder ein Teil eines Paravents oder eine fixe oder verschiebbare Zwischenwand im Sinne eines Raumteilers oder auch Bestandteil eines Möbels. Das Verbindungssystem dient in diesem Beispiel der Verbindung des Untergrunds 300 mit zweiten, plattenartigen Einzelsegmenten, die als Fliesen 200 ausgebildet sind, und zwar als Fliesen aus transparentem oder semitransparentem Material wie z.B. aus Acrylglas, Jade oder sehr dünnem Holz. Das erfindungsgemässe Verbindungssystem ist in diesem Beispiel ausgebildet gemäss der Variante 10c, wie sie in den Fig. 12a, 12b dargestellt ist, so dass eine fugenbildende Wulst 49 der Bolzenbaugruppe 40 auf der Werkstoffebene des Untergrunds 300 aufliegt und die Fliesen 200 in definiertem Abstand zum Untergrund 300 fixiert hält. Verriegelungshülsen 14 und Bolzenbaugruppen 40 sind wiederum in Ausnehmungen des Untergrunds 300 bzw. der Fliesen 200 fixiert, wobei die Ausnehmungen in ihrer Anordnung wieder aufeinander abgestimmt sind, so dass sie zur Deckung gebracht werden können und die in ihnen fixierten Elemente 14, 40 des Verbindungssystems 10 ihre magnetisch gesicherte, mechanische Verbindung eingehen können.

Durch die fugenbildenden Wulste 49 der Bolzenbaugruppen 40c werden die Fliesen 22 nur bis auf einen definierten Abstand gegen den Untergrund 300 gezogen. Der Spalt bzw. die Fuge 68, die zwischen den Fliesen 200 und dem Untergrund 300 bestehen bleibt kann beispielsweise genutzt werden, um darin Beleuchtungskörper 98 mit einer entsprechenden elektrischen Leitung 96 zu verlegen, so dass die transparenten bzw. semitransparenten Fliesen hinterleuchtet werden können. Obgleich hier punktförmige Beleuchtungskörper 98 dargestellt sind, ist es natürlich auch möglich lineare oder flächige Beleuchtungskörper in dieser Weise zu verwenden. Insbesondere lineare oder flächige Beleuchtungskörper lassen sich natürlich auch als dritte Einzelelemente 23 konzipieren mit einer durchgehenden Öffnung 104 und zwischen Untergrund 300 und Fliesen 200 anordnen, analog zu dem Beispiel aus Figur 33.

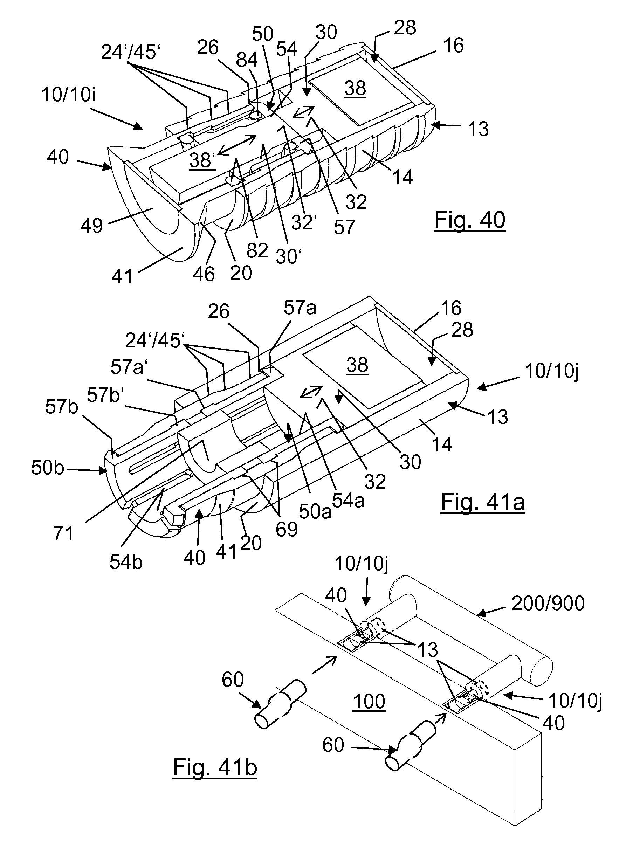

In bestimmten Situationen, beispielsweise bei einer Verwendung des Verbindungssystems 10 in feuchter Umgebung wie z.B. in Badezimmern oder Küchen, kann es von Interesse sein, die Verbindung wasserdicht auszuführen. Hierfür sind weitere Varianten 10i, 10j des Verbindungssystems 10 geeignet, wie sie in den Fig. 40 und 41a, 41b gezeigt sind.

Die Variante 10i des Verbindungssystems 10, das in Fig. 40 gezeigt ist, ist sehr ähnlich aufgebaut wie die Variante 10h aus den Figuren 23a, 23b. Sie unterscheidet sich allerdings dadurch von der dort gezeigten Variante 10h, dass hier die Bolzenbaugruppe 40 einen viel längeren Bolzenhohlkörper 41 aufweist. Durch die grössere Länge des Bolzenhohlkörpers 41, überragt der Bolzenhohlkörper 41 die Verrieglungshülse 14 axial nach dem Einschieben in die Verrieglungshülse 14, so dass im Gegensatz zu der Variante 10h aus Fig. 23a, 23b die Planfläche 46 des Bolzenhohlkörpers 41 nicht mit der Hülsenplanfläche 20 der Verriegelungshülse 14 in Anschlag gelangt. Wie aus Fig. 40 ersichtlich, sind Hülsenplanfläche 20 und Planfläche 46 daher für die Variante 10i auch nicht zwingend gegengleich ausgebildet. Der Bolzenhohlkörper 41 weist Aussenkonusflächen 45' auf, die hochpräzise auf die Innenkonusflächen 24' der Verriegelungshülse 14 der zugehörigen Hülsenbaugruppe 13 abgestimmt sind, so dass die Aussenkonusflächen 45' und die Innenkonusflächen 24' ineinander geschoben eine wasserdichte Dichtung bilden. Vorteilhafter Weise ist für eine solche wasserdichte Ausgestaltung der Bolzenhohlkörper 41 aus Stahl gefertigt und die Verriegelungshülse 14 aus Berylliumkupfer. Für eine noch bessere Dichtung können Bolzenhohlkörper 41 und Verriegelungshülse 14 optional wenigstens im Bereich ihrer Konusflächen 24', 45' zusätzlich mit Silber, Gold, Nickel, Kupfer, Blei oder Teflon beschichtet sein.

Die Bolzenbaugruppe 40 der in Fig. 40 dargestellten Variante 10i weist, wie gesagt einen Bolzenhohlkörper 41 auf, der axial eine grössere Länge aufweist, so dass die Hülsenplanfläche 20 der Verriegelungshülse 14 nicht mit der hier konusförmig ausgestalteten Planfläche 46 des Bolzenhohlkörpers 41 in Kontakt kommt, wenn die Bolzenbaugruppe 40 ganz, das heisst bis zum Einrasten des Schnappmechanismus -gebildet aus Flanschen 57 und Verriegelungsschulter 26 - in die Verriegelungshülse 14 der Hülsenbaugruppe 13 eingeschoben wird. Auch der Magnet 38' des in den Sicherungszylinder 50 eingesetzten Schaltelements 30', welcher im Schaltelement 30' axial bewegbar gelagert ist und einen Sicherungszapfen 32' aufweist, besitzt eine entsprechend an die Länge des Bolzenhohlkörpers 41 angepasste grössere Länge als in der Variante 10h in Fig. 23a, 23b. Nach dem Einrasten des Schnappmechanismus bzw. der Flansche 57 des Sicherungszylinders 50 hinter die Verriegelungsschulter 26 in der Verriegelungshülse 14, ziehen sich die Magnete 38, 38' der beiden Schaltelemente 30, 30' gegenseitig an, so dass sich schliesslich der Sicherungszapfen 32, 32' wenigstens eines Schaltelements 30, 30' in der Sperröffnung 54 zwischen den Flanschen 57 des Sicherungszylinders 50 befindet und den Schnappmechanismus gegen ein ungewolltes Öffnen sichert.

Zum Lösen der magnetischen Sicherung des Schnappmechanismus, d.h. zum Herausziehen des Sicherungszapfens 32, 32' des wenigstens einen Schaltelements 30, 30' aus der Sperröffnung 54 des Sicherungszylinders 50, kann ein Schaltmagnet 60, 60' axial zum Verbindungssystem 10/10i geführt werden mit gleicher Wirkung unabhängig von der gewählten Seite: Seite Hülsenbaugruppe 13 oder Seite Bolzenbaugruppe 40.

In der Variante 10j, die in Fig. 41a, 41b dargestellt ist, ist die Bolzenbaugruppe 40 als Doppelbolzen ausgebildet und greift axial mit beiden Enden in eine Hülsenbaugruppe 13 ein, wobei hier der Übersichtlichkeit halber aber nur eine Hülsenbaugruppe 13 dargestellt ist. Wie in der Variante 10i ist auch hier in der Variante 10j der Bolzenhohlkörper 41 aus Stahl gefertigt und die Verriegelungshülse 14 aus Berylliumkupfer. Die Konusflächen 24', 45' sind wiederum hochpräzise aufeinander abgestimmt, so dass sie beim ineinandergreifen eine wasserdichte Abdichtung ergeben. Ansonsten ist die Hülsenbaugruppe 13 mit Verriegelungshülse 14 und mit einem Schaltelement 30 mit darin fixiertem Magnet 38 und einem Sicherungszapfen 32 ähnlich aufgebaut, wie diejenige aus den Fig. 3 und 4. Die als Doppelbolzen ausgebildete Bolzenbaugruppen 40 gleicht dagegen ansonsten im Wesentlichen der Bolzenbaugruppe 40 der Variante 10b aus den Fig. 10a, 10b. Sie greift, wie gesagt, für ein Zusammenfügen von zwei Einzelsegmenten eines zu fügenden Gegenstandes mit ihren beiden axialen Enden je in eine Hülsenbaugruppe 13 der gezeigten Art ein, wobei die Hülsenbaugruppen 13 in je einer Ausnehmung eines Einzelsegmentes 100, 200 fixiert sind, wie dies in Fig. 41b dargestellt ist.

Die Bolzenbaugruppe 40 der in den Fig. 41a, 41b gezeigten Variante 10j umfasst einen Bolzenhohlkörper 41 in den von seinen beiden axialen Enden her je ein kurzer doppelseitig ausgebildeter Sicherungszylinder 50a, 50b einpassbar ist, wobei die im Bolzenhohlkörper 41 zu liegen kommenden, sich radial über den Mantel des Sicherungszylinders 50 hinaus erstreckenden Innenflansche 57a', 57b' in Aussparungen oder umlaufende Nuten 70a, 70b eingreifen und auf diese Weise im Bolzenhohlkörper 41 fixiert sind. Um die Sicherungszylinder 50a, 50b gegen ein ungewolltes Herausziehen aus dem Bolzenhohlkörper 41 zu sichern, ist es vorteilhaft einen oder mehrere Blockierkörper 71 reibschlüssig fest in die Sicherheitszylinder 50a, 50b derart einzusetzen, dass der/die Blockierkörper 71 die Innenflansche 57a', 57b' von innen in die Aussparungen bzw. umlaufenden Nuten 70a, 70b des Bolzenhohlkörpers 41 drückt/drücken und gegen diesen verspannt/verspannen. In Fig. 41a, ist nur ein solcher Blockierkörper 71 dargestellt, der beide Innenflansche 57a', 57b' in ihren Nuten 70a, 70b sichert; es könnte aber auch für jeden der beiden Sicherungszylinder 50a, 50b ein eigener Blockierkörper vorgesehen sein.

Vorteilhafterweise ist der Blockierkörper 71 aus einem magnetisierbaren oder magnetischen Material, so dass der Magnet 38 des in der Hülsenbaugruppe 13 axial bewegbar gelagerten Schaltelementes 30 - nach dem Einschieben der Bolzenbaugruppe 40 in die Hülsenbaugruppe 13 - entsprechend angezogen wird. Der Sicherungszapfen 32 dieses Schaltelementes 30 bewegt sich dann entsprechend - nach Einrasten der Flansche 57a hinter die Verriegelungsschulter 26 der Verriegelungshülse 14 - in die Sperröffnung 54 zwischen die Flansche 57 und sichert so die Verbindung zwischen Bolzenbaugruppe 40 und Hülsenbaugruppe 13. Dies geschieht an beiden axialen Enden der Bolzenbaugruppe 40, so dass auch die Verbindung zwischen zwei Einzelsegmenten, welche durch das Verbindungssystem 10/10j miteinander verbunden sind, vor einem ungewollten Lösen gesichert ist.

Wie bereits oben angesprochen ist in Fig. 41b beispielhaft an einer Schubladenfront eines Badezimmermöbels als erstem Einzelsegment 100 und einem dazu passenden als Griff ausgebildeten Beschlagelement 900 als zweitem Einzelsegment 200 ein Zusammenfügen von zwei Einzelsegmenten 100, 200/900 mit Hilfe der in Fig. 41a gezeigten Variante 10j des Verbindungssystems 10 dargestellt. Wie durch die in Fig. 41b dargestellten Schaltmagnete 60 angedeutet, ist die Verbindung zwischen den Bolzenbaugruppen 40 und den in der Schubladenfront 100 angeordneten Hülsenbaugruppen 13 hier durch das Aufbringen eines externen Magnetfeldes mittels der Schaltmagnete 60 lösbar (siehe auch Mechanismus dargestellt anhand der Fig. 9a-9c).

Nun kann es aber vorkommen, wie beispielsweise auch bei der hier dargestellten Ausgestaltung des Griffes 200/900, dass der Schaltmechanismus zum Lösen der Verbindung zwischen der als Doppelbolzen ausgestalteten Bolzenbaugruppe 40 und in diesem Beispiel im Griff 900 verbliebenen Hülsenbaugruppe 13 nicht mehr von aussen erreichbar ist durch ein von einem Schaltmagneten ausgehenden Magnetfeld. Für eine solche Situation ist ein Trennwerkzeug 3000 vorgesehen, wie es in den 42a bis 42d dargestellt und in seiner Funktionsweise erklärt ist.

Das Trennwerkzeug 3000 weist ein Funktionsgehäuse 3001 auf mit einem konzentrisch darin angeordneten Funktionszylinder 3002, die gegeneinander verschiebbar sind. Des Weiteren umfasst das Trennwerkzeug 3000 einen Exzenterhebel 3010, der mit dem Funktionszylinder 3002 über ein Gelenk 3012' mit Gelenkachse 3012 schwenkbar verbundenen ist.

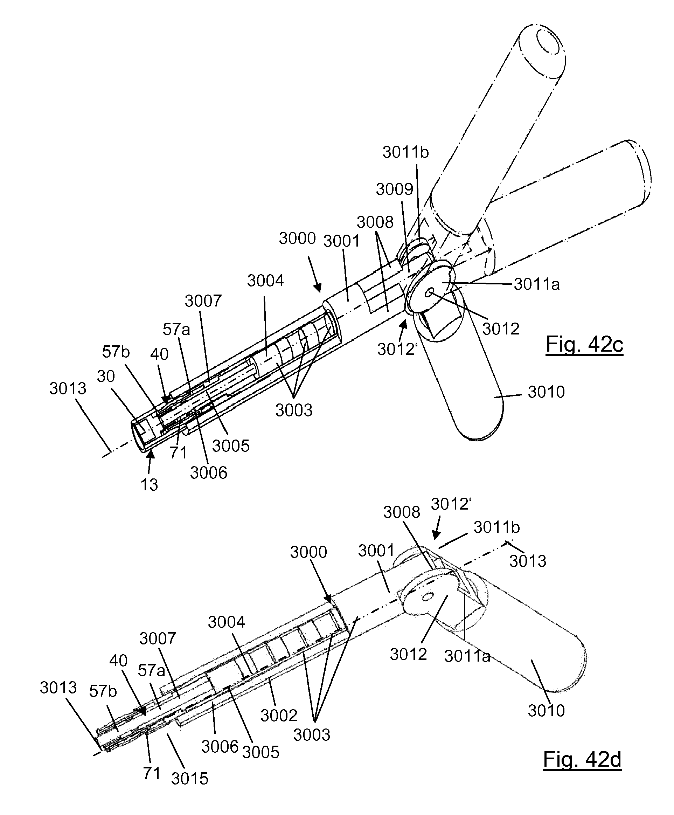

An seinem, dem Gelenk 3012' gegenüberliegenden Ende ist- in diesem Beispiel - in den Funktionszylinder 3002 ein Sperrzylinder 3006 eingesetzt, dessen Aussendurchmesser etwa dem Innendurchmesser des Funktionszylinders 3002 entspricht. Der Sperrzylinder 3006 ist im Funktionszylinder 3002 fixiert, beispielsweise durch Einschrauben oder eine Presspassung, und verschliesst den Funktionszylinder 3002 mit Ausnahme einer konzentrischen Durchgangsöffnung. Der Sperrzylinder 3006 könnte aber auch an den Funktionszylinder 3002 angesetzt oder aussen aufgeschraubt/aufgepresst sein. Auf der dem Gelenk 3012' gegenüberliegenden Seite ist der Sperrzylinder 3006 fest mit einem Funktionstubus 3007 verbunden, der den Sperrzylinder 3006 zumindest im Bereich seines dem Gelenk 3012' abgewandten Endes radial beabstandet umgibt. An diesem Ende weist der Funktionstubus 3007 einen nach innen vorstehenden Kragen 3015 auf (Fig. 42d). Sein Aussendurchmesser ist in diesem Endbereich etwas größer, als der Innendurchmesser des Gehäuses 3001, so dass dieser Endbereich vom Gehäuse 3001 leicht zusammengedrückt wird, wenn es über den Funktionstubus 3007 geschoben wird. Damit das Überschieben leichter geht, kann dieser Endbereich leicht konisch sich gegen das Ende hin erweiternd ausgebildet sein. Der Sperrzylinder 3006 ragt in dieser Richtung über den Funktionstubus 3007 hinaus, wobei der nach innen vorstehenden Kragen 3015 des Funktionstubus 3007 nur soweit nach innen vorsteht, dass eine ringförmige Öffnung realisiert wird, die in ihren Dimensionen den Flanschen 57 von Sicherungszylindern 50 derart angepasst ist, dass die Flansche 57 von der ringförmigen Öffnung zwischen Sperrzylinder 3006 und Funktionstubus 3007 aufgenommen werden können.

Auf der dem Gelenk 3012' zugewandten Seite des Sperrzylinders 3006 ist in den Funktionszylinder 3002 axial verschiebbar eine Halterung 3004 eingesetzt, in welcher eine stumpfe, sich vom Gelenk 3012' weg erstreckende Nadel 3005 fixiert ist. Die Nadel 3005 ist konzentrisch gehalten und in montiertem Zustand des Trennwerkzeugs 3000 durch die konzentrische Durchgangsöffnung des Sperrzylinders 3006 hindurchgeführt. Liegt die Halterung 3004 im Funktionszylinder 3002 am Sperrzylinder 3006 an, so ragt die Nadel 3005 über das Ende des Sperrzylinders 3006 und das Ende des Funktionstubus 3007 hinaus, wobei der herausragende Teil etwas länger ist als die axiale Ausdehnung einer Bolzenbaugruppe 40, die mit dem Trennwerkzeug 3000 aus einer Hülsenbaugruppe 13 entfernt werden soll.

Damit unterschiedliche Bolzenbaugruppen mit dem Trennwerkzeug 3000 entfernbar sind, ist die Nadel 3005 des Trennwerkzeugs 3000 vorzugsweise austauschbar, so dass angepasst an die Bolzenbaugruppe die passende Nadel verwendet werden kann. Dabei kann entweder die Nadel in der Halterung austauschbar sein, oder die Halterung mit der Nadel oder der gesamte Funktionszylinder mit der Nadel.

Die verwendbaren Nadeln 3005 haben einen geringeren Durchmesser als die Sperröffnungen 54, 54a, 54b der Sicherungszylinder 50, 50a, 50b und für Bolzenbaugruppen, wie sie in Fig. 41a dargestellt sind, auch einen geringeren Durchmesser als die Durchgangsöffnung des im Inneren der Bolzenbaugruppe 40 in der Mitte platzierten, hohlzylindrischen Blockierkörpers 71. Die Nadel 3005 kann somit in den Sicherungszylinder 54, 54a, 54b ein- und wo nötig durch die Bolzenbaugruppe 40 hindurch geschoben werden.

Gelenkseitig von der Halterung 3004 der Nadel 3005 sind im Funktionszylinder 3002 mindestens zwei Magnetelemente 3003 verschiebbar gegeneinander angeordnet und zwar derart, dass sich ihre Magnetfelder abstossen. Gelenkseitig werden die Magnetelemente 3003 im Funktionszylinder 3002 zurückgehalten durch einen die Magnetelemente zurückhaltenden Verschluss des Funktionszylinders. Dieser Verschluss kann am einfachsten durch die Gelenkachse 3012 gebildet sein oder beispielsweise auch durch einen den Funktionszylinder verschliessenden konzentrischen Gelenkzapfen, der beispielsweise ein- oder aufgeschraubt ist oder eingepresst und/oder mit einem Stift gesichert ist oder ähnliches. Im gezeigten Beispiel ist der Funktionszylinder 3002 einfach durch die Gelenkachse 3012, soweit verschlossen, dass die Magnetelemente 3003 - unter Vorspannung bzgl. ihrer sich gegenseitig abstossenden Magnetfelder - im Funktionszylinder 3002 gehalten werden.

Die Zylinderwände des Funktionszylinders 3002 weisen in dem hier gezeigten Beispiel in jenem, dem Gelenk zugewandten Endbereich, Achsöffnungen zur Aufnahme der Gelenkachse 3012 auf und bilden mit diesem Endbereich bzgl. des Gelenks 3012' sozusagen einen Gelenkzapfen 3009. Dieser Gelenkzapfen 3009 ist zwischen zwei Gelenkbacken 3011a, 3011b des Exzenterhebels 3010 gelagert, wobei die Gelenkachse 3012 durch die Gelenkbacken 3011a, 3011b und den Gelenkzapfen 3009 geführt ist, so dass der Exzenterhebel 3010 und das Funktionsgehäuse 3001 mit dem Funktionszylinder 3002 um die Gelenkachse 3012 gegeneinander verschwenkbar sind. Die Gelenkbacken 3011a, 3011b weisen unterschiedlich große Aussenradien auf, die dazu bestimmt sind, mit zwei unterschiedlich langen Gehäuseflanschen 3008a, 3008b des Funktionsgehäuses 3001 zusammenzuwirken, die gelenkseitig von dem Funktionsgehäuse 3001 abstehen.

Die Dimensionen der Gehäuseflansche 3008a, 3008b sind so bemessen, dass sie in einem Ausgangszustand, bei dem das Funktionsgehäuse 3001, den Sperrzylinder 3006 und den Funktionstubus 3007 radial umgibt, mit den Gelenkbacken 3011a, 3011b, zusammenwirken. Wie bereits gesagt ist das Funktionsgehäuse 3001 auf dem Funktionszylinder 3002 verdrehbar und axial verschiebbar gelagert. Aus der Ausgangsposition ist es z.B. von Hand verdrehbar und auf das Gelenk 3012' hin verschiebbar, wobei die Gehäuseflansche 3008a, 3008b zwischen die Gelenkbacken 3011a, 3011b schiebbar sind. In dieser Position gibt das Funktionsgehäuse 3001 zumindest den Funktionstubus 3007 zur Hälfte frei.

Im Weiteren wird nun die Funktionsweise des Trennwerkzeugs 3000 anhand einer Bolzenbaugruppe 40 und einer Hülsenbaugruppe 13 beschrieben, wie sie in Fig. 41a dargestellt sind.

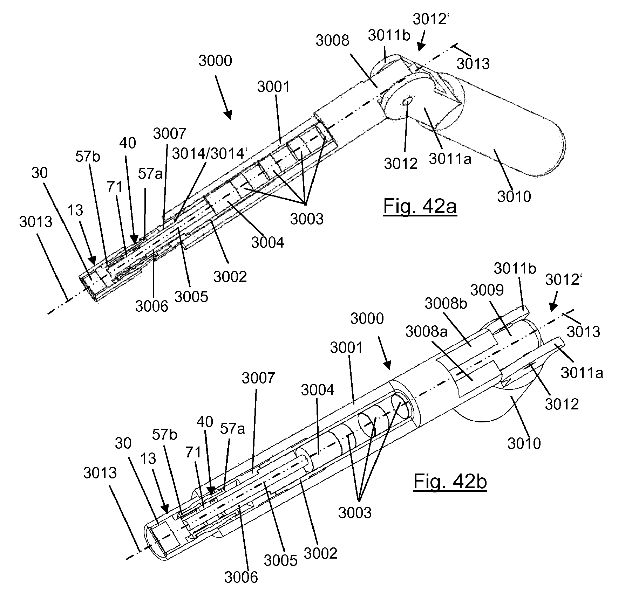

Um eine Bolzenbaugruppe 40 von einer Hülsenbaugruppe 13 zu trennen, muss die Nadel 3005 des Trennwerkzeugs 3000 von der der Hülsenbaugruppe 13 gegenüberliegenden Seite in die Bolzenbaugruppe 40 eingeführt werden. Hierfür wird das Gehäuse 3001 so verdreht, dass die Gehäuseflansche 3008a, 3008b zwischen die Gelenkbacken 3011a, 3011b verschiebbar sind und anschliessend wird das Gehäuse 3001 bis zum Anschlag gegen das Gelenk 3012' verschoben (Fig. 42a). Die Nadel 3005 kann nun zielgerichtet auf bzw. in die Sperröffnung 54b des Sicherungszylinders 50b der Bolzenbaugruppe 40 aus Fig. 41a gesetzt werden. Das Trennwerkzeug 3000 wird gegen Bolzenbaugruppe 40 und Hülsenbaugruppe 13 geschoben. Dabei wird die Nadel 3005 in die Bolzenbaugruppe 40 und durch sie hindurch geschoben, so dass sie auf der gegenüberliegenden Seite der Bolzenbaugruppe 40 das Schaltelement 30 der Hülsenbaugruppe 13 gegen die Hülsenabdeckung 16 schiebt und den Sicherungszapfen 32 aus der Sperröffnung 54a hinausschiebt. Hilfreich ist hierbei, dass die Nadel 3005 die Sperröffnungen 54a, 54b nicht völlig ausfüllt, so dass die Flansche 57a, 57b zusammengedrückt und der Schnappmechanismus gelöst werden kann.

Drückt man das Trennwerkzeug 3000 noch weiter gegen die Bolzenbaugruppe 40 und die Hülsenbaugruppe 13 wird die Nadel 3005 bzw. ihre Halterung 3004 im Funktionszylinder 3002 in Richtung des Gelenks 3012' geschoben und die Magnetelemente 3003 werden gegen den Widerstand ihrer einander abstossenden Magnetfelder zusammengedrückt. Der Funktionstubus 3007 und der Sperrzylinder 3006 werden gleichzeitig noch weiter gegen die Bolzenbaugruppe 40 geschoben, wobei der Sperrzylinder 3006, welcher die Nadel 3005 konzentrisch umgibt, zwischen die Flansche 57b und in die von den Flanschen 57 gebildete Sperröffnung 54b eingeschoben wird. Der Funktionstubus 3007 wird schliesslich über die Flansche 57b des Sicherungszylinders 50b geschoben, wobei die Flansche 57b in der ringförmigen Öffnung, die sich zwischen dem nach innen vorstehenden Kragen 3015 des Funktionstubus und dem Sperrzylinder 3006 ergibt, aufgenommen werden. Es sei hier angemerkt, dass obgleich in den Figuren in der Regel vier Flansche 57 und vier diese Flansche 57 tragende Federelemente 56 dargestellt sind, ist es möglich den Sperrzylinder auch nur mit zwei oder drei oder auch mit mehr als vier Federelementen mit entsprechenden Flanschen zu versehen.

Das Funktionsgehäuse 3001 wird nun bis zur Hülsenbaugruppe 13 vorgeschoben und verdreht (Fig. 42 b), so dass die Gehäuseflansche 3008a, 3008b nun an den Gelenkbacken 3011a, 3011b des Exzentergriffs 3010 anliegen. Bei dieser Bewegung des Gehäuses 3001 wird der Funktionstubus 3007 mit seinem Kragen 3015 vom Gehäuse 3001 leicht zusammengedrückt, so dass die Flansche 57b im Funktionstubus 3007 den Kragen 3015 hintergreifen. Die Bolzenbaugruppe 40 ist somit fest aber lösbar mit dem Trennwerkzeug 3000 verbunden, aber nur noch "lose" mit der Hülsenbaugruppe 13 (Fig. 42a).

Je nach dem, ob die Bolzenbaugruppe eine Wulst 42 für die Ausbildung einer Schattenfuge 68 hat oder nicht- und daher etwas länger oder kürzer ist in ihrer axialen Ausdehnung-, wird das Funktionsgehäuse 3001 so verdreht, dass die Gelenkbacke 3011a mit dem grossen Radius mit dem kurzen Gehäuseflansch 3008a oder mit dem langen Gehäuseflansch 3008b zusammenwirkt und die Gelenkbacke 3011b mit dem kleinen Radius entsprechend umgekehrt.

Nun wird der Exzentergriff 3010 verschwenkt, wodurch das Funktionsgehäuse gegen die Planfläche 20 der Verriegelungshülse 14 der Hülsenbaugruppe 13 gedrückt wird und die Bolzenbaugruppe 40 mit sehr geringem Kraftaufwand aus der Hülsenbaugruppe 13 herausgezogen wird (Fig. 42c). Hülsenbaugruppe 13 und Bolzenbaugruppe 40 sind voneinander getrennt und das Trennwerkzeug 3000 mit der Bolzenbaugruppe 40 kann von der Hülsenbaugruppe 13 und dem Einzelsegment in dem es verankert ist, entfernt werden.

Mit dem Trennen von Hülsenbaugruppe 13 und Bolzenbaugruppe 40 wird die Druckbelastung von der Nadel 3005 genommen. Die Halterung 3004 mit der Nadel 3005 wird durch die einander abstossenden Magnetfelder der Magnetelemente 3003 im Funktionszylinder 3002 wieder in ihre Ausgangsposition zurückgeschoben, in welcher sie sich wieder im Anschlag mit dem Sperrzylinder 3006 befindet. Die Nadel 3005 ist somit wieder einsatzbereit.

Anschliessend wird das Funktionsgehäuse 3001 in seine Ausgangsposition zurückgedreht und in Richtung des Gelenks 3012' geschoben. Der Funktionstubus 3007 wird zumindest im Bereich seines Kragens 3015 wieder vom Gehäuse 3001 freigegeben und stellt aus der zusammengedrückten Stellung in die Ausgangstellung zurück, wodurch die Flansche 57b des Sicherungszylinders 50b der Bolzenbaugruppe 40 freigegeben werden. Die Bolzenbaugruppe 40 kann nun ganz leicht vom Trennwerkzeug getrennt werden.

Wie gezeigt werden konnte, kann das erfindungsgemässe Verbindungssystem vielseitig, flexibel und auch für Laien einfach handhabbar eingesetzt werden.

Dem Fachmann ist klar, dass und in welcher Weise sich die beschriebenen Ausführungsformen bzw. die anhand der Ausführungsbeispiele beschriebenen Details innerhalb des durch die Patentansprüche gesteckten Rahmens sinnvoll kombinieren lassen. Aus Platzgründen ist es aber nicht möglich, alle möglichen und sinnvollen Kombinationen, die im durch die Patentansprüche definierten Bereich liegen, im Detail figürlich darzustellen und/oder zu beschreiben.

## Patentansprüche

1. Verbindungssystem (10) zum Erstellen einer festen aber lösbaren Fügung von wenigstens zwei Einzelsegmenten (100, 200, 300, 400, 500, 900) zu gefügten Gegenständen mit
• einer versenkt und fest in einer Ausnehmung (99) eines ersten Einzelsegments (100, 300) anordenbaren Hülse und mit
• einem Bolzen, der für ein Eingreifen in die genannte Hülse ausgestaltet ist, und mit
• einem Magneten, vermittels dessen eine magnetische Anziehungskraft in der Fügung wirkt, und der durch ein äusseres Magnetfeld derart bewegbar ist, dass die Fügung lösbar ist,
**dadurch gekennzeichnet, dass**
die Hülse eine Hülsenbaugruppe (13) und der Bolzen eine Bolzenbaugruppe (40) ist und
• Hülsenbaugruppe (13) und Bolzenbaugruppe (40) derart aufgebaut sind, dass sie vermittels eines Schnappmechanismus in einer festen aber lösbaren, mechanischen Verbindung zusammenfügbar sind, wobei
• der Schnappmechanismus mittels des Magneten (38) sicherbar ist, und diese Sicherung durch Bewegung des Magneten (38) mittels eines äusseren Magnetfelds entsichert und die mechanische Verbindung zwischen Hülsenbaugruppe (13) und Bolzenbaugruppe (40) lösbar ist.

2. Verbindungssystem (10) nach Anspruch 1,
**dadurch gekennzeichnet, dass**
Hülsenbaugruppe (13) und Bolzenbaugruppe (40) derart ausgestaltet sind, dass die Sicherung der mechanischen Verbindung zwischen Hülsenbaugruppe (13) und Bolzenbaugruppe (40), mit Hilfe des Magneten (38) während des Fügeprozesses selbsttätig und ohne äusseres Zutun erfolgt.

3. Verbindungssystem (10) nach Anspruch 1 oder 2,
**dadurch gekennzeichnet, dass**
• die Bolzenbaugruppe (40) einen Sicherungszylinder (5) mit einer Sperröffnung (54) aufweist und
• der Magnet (38) Bestandteil eines Schaltelements (30) ist, welches einen Sicherungszapfen (32) aufweist, und
• zur Sicherung der mechanischen Verbindung zwischen Hülsenbaugruppe (13) und Bolzenbaugruppe (40), der Sicherungszapfen (32) in die Sperröffnung (54) des Sicherungszylinders (50) einführbar ist.

4. Verbindungssystem (10) nach Anspruch 3,
**dadurch gekennzeichnet, dass**
• der Sicherungszylinder (50) wenigstens zwei Flansche (57) an Federelementen (55) aufweist und
• die Hülsenbaugruppe (13) eine Verriegelungshülse (14) mit einer im Innern der Verriegelungshülse (14) liegenden Verriegelungsschulter (26) aufweist, wobei
• die Verriegelungsschulter (26) und die federnd gelagerten Flansche (57) beim Zusammenfügen von Bolzenbaugruppe (40) und Hülsenbaugruppe (13) in einem Schnappmechanismus zusammenwirken und die Flansche (57) in die Verriegelungsschulter (26) einrasten und diese hintergreifen, so dass sie eine feste mechanische Verbindung zwischen Bolzenbaugruppe (40) und Hülsenbaugruppe (13) realisieren.

5. Verbindungssystem (10) nach einem der vorhergehenden Ansprüche,
**dadurch gekennzeichnet, dass**
die Bolzenbaugruppe (40) einen Bolzenhohlkörper (41) aufweist, in dem ein Sicherungszylinder (50) gelagert ist, wobei der Bolzenhohlkörper (41) Aussenkonusflächen (45) aufweist, die gegengleich mit Innenkonusflächen (24) der Verriegelungshülse (14) der Hülsenbaugruppe (13) ausgebildet sind und beim Zusammenfügen von Bolzenbaugruppe (40) und Verriegelungshülse (14) zentrierend und/oder dichtend zusammenwirken.

6. Verbindungssystem (10) nach einem der Ansprüche 3 bis 5,
**dadurch gekennzeichnet, dass**
der Sicherungszylinder (50) Flansche (57) an Federelementen (55) aufweist und die Flansche (57) aus dem Bolzenhohlkörper (41) herausragen und radial über eine benachbarte Aussenkonusfläche hinausragen.

7. Verbindungssystem (10) nach einem der vorhergehenden Ansprüche,
**dadurch gekennzeichnet, dass**
der Magnet (38) Bestandteil eines Schaltelements (30) ist, und dieses Schaltelement (30) in einem Hülsenkanal (28) einer Verriegelungshülse (14) der Hülsenbaugruppe (13) axial bewegbar angeordnet ist.

8. Verbindungssystem (10) nach einem der Ansprüche 1 bis 5,
**dadurch gekennzeichnet, dass**
der Magnet (38) Bestandteil eines Schaltelements (30) ist und dieses Schaltelement (30) in der Bolzenbaugruppe (40) so angeordnet ist, dass zumindest der Sicherungszapfen (32) axial bewegbar ist.

9. Verbindungssystem (10) nach einem der Ansprüche 1 bis 6,
**dadurch gekennzeichnet, dass**
die Bolzenbaugruppe (40) als Doppelbolzen (40b, 40c) ausgebildet ist und dafür bestimmt ist mit zwei Hülsenbaugruppen (13', 13") zusammenzuwirken.

10. Verbindungssystem (10) nach einem der vorhergehenden Ansprüche,
**dadurch gekennzeichnet, dass**
Mittel zur Erzeugung (49, 74, 151) einer Schattenfuge (68) zwischen den zusammenzufügenden Einzelsegmenten (100, 101, 200, 300, 400, 500, 900) vorgesehen sind.

11. Verbindungssystem (10) nach Anspruch 9,
**dadurch gekennzeichnet, dass**
die Bolzenbaugruppe (40) als Doppelbolzen (40b, 40c) eine Wulst (49) aufweist zur Erzeugung einer Schattenfuge (68) zwischen den zusammenzufügenden Einzelsegmenten (100, 101, 200, 300, 400, 500, 900).

12. Verbindungssystem (10) nach einem der vorhergehenden Ansprüche,
**dadurch gekennzeichnet, dass**
die Flansche (57) des Sicherungszylinders 50 bzgl. der Sicherungszylinders (50) stirnseitig derart ausgebildet sind, dass sie gemeinsam radial aussen einen Führungskonus (58) bilden und auf der, der Seite mit dem Führungskonus (58) gegenüberliegenden Seite radial aussen Gleitrundungen (59) aufweisen.

13. Verbindungssystem (10) nach einem der vorhergehenden Ansprüche,
**dadurch gekennzeichnet, dass**
der Magnet (38) aus Neodym oder einer Neodym-Verbindung, insbesondere einer Neodym-Eisen-Bohr-Verbindung gefertigt ist.

14. Einzelsegment (100, 101, 200, 300, 400, 500, 900),
**dadurch gekennzeichnet, dass**
es ein Element aus einer Gruppe von Elementen ist, wobei die Gruppe wenigstens folgende Elemente umfasst: blockartige Elemente, plattenartige Elemente, balkenartige Elemente, Beschläge, Fliesen, Bodensegmente, Verkleidungen, Untergründe im Sinne von Wänden, Böden, Decken; und es wenigstens eine Ausnehmung (99, 99') bzw. durchgehende Öffnung (104) mit einer darin fixierten Hülsenbaugruppe (13) oder Bolzenbaugruppe (40) eines Verbindungssystems (10) gemäss einem der vorhergehenden Ansprüche aufweist.

15. Einzelsegment (100, 101, 200, 300, 400, 500, 900) nach Anspruch 13,
**dadurch gekennzeichnet, dass**
es ein Einzelsegment eines Möbels ist und es mehrere Ausnehmungen (99, 99') bzw. durchgehende Öffnungen (104) aufweist, wobei mindestens in einer Ausnehmung (99, 99') bzw. durchgehenden Öffnung (104) eine Hülsenbaugruppe (13) oder Bolzenbaugruppe (40) eines Verbindungssystems (10) gemäss einem der vorhergehenden Ansprüche fixiert ist, und wobei die Ausnehmungen (99, 99') bzw. durchgehenden Öffnungen (104) in einem für den Möbelbau üblichen Raster angeordnet sind und einen für den Möbelbau üblichen Durchmesser haben.

16. Ein zerlegbarer, gefügter Gegenstand, insbesondere aus der Gruppe umfassend: Möbel, Türen, Fenster, Fliesenwände, Bodenbeläge, Verkleidungen
**dadurch gekennzeichnet, dass**
er aus Einzelsegmenten (100, 101, 200, 300, 400, 500, 900) gemäss einem der Ansprüche 14 oder 15 gefügt ist und mittels eines Verbindungssystems (10) nach einem der Ansprüche 1 bis 13.

17. Werkzeug (1000, 2000) zum Setzen einer Bolzenbaugruppe (40) bzw. zum Setzen einer Hülsenbaugruppe (13) bzw. einer Verriegelungshülse (14) einer Hülsenbaugruppe (13) eines Verbindungssystems (10) gemäß den Ansprüchen 1 bis 13 umfassend: einen hohlzylindrischen Körper (1001, 2001) mit einem breiten Aufsetzteller (1005, 2005), in den ein Stempel (1002, 2002) einsetzbar ist, wobei der Stempel (1002, 2002) an seiner in den hohlzylindrischen Körper (1001, 2001) einführbaren Seite mit einer Spitze (1003, 2003) versehen ist und auf seiner der Spitze (1003, 2003) gegenüberliegenden Seite mit einem Griff (1004, 2004) versehen ist, und der Griff (1004, 2004) einen grösseren Aussendurchmesser aufweist als der Stempel (1002, 2002), der auch grösser ist als der Innendurchmesser des hohlzylindrischen Körpers (1001, 1002), so dass der Stempel (1002, 2002) nur bis zu einer definierten Tiefe in den hohlzylindrischen Körper (1001, 2001) eindringen kann.

18. Werkzeug (1000, 2000) nach Anspruch 17,
**dadurch gekennzeichnet, dass**
austauschbare Stempel (1002, 2002) vorgesehen sind, die angepasst an die zu setzende Bolzenbaugruppe (40) bzw. Hülsenbaugruppe (13) bzw. Verriegelungshülse (14) eine andere Spitze (1003, 2003) aufweisen, wobei die Tiefe, bis zu der ein Stempel (1002, 2002) in den hohlzylindrischen Körper (1001, 2001) eindringen kann bzw. ein Bewegungsweg des Stempels 1002, 2002) im hohlzylindrischen Körper (1001, 2001) abhängig ist von der Spitze (1003, 2003), und wobei vorzugsweise der Griff (1004, 2004) eine andere Markierung insbesondere Farbe aufweist abhängig von der Spitze (1003, 2003).

19. Trennwerkzeug (3000) zum Trennen einer Bolzenbaugruppe (40) von einer Hülsenbaugruppe (13) eines Verbindungssystems (10) gemäß den Ansprüchen 1 bis 13, umfassend:
Mittel zum temporären, festen Verbinden der Bolzenbaugruppe (40) mit dem Trennwerkzeug (3000);
Mittel zum mechanischen Hinausschieben eines Schaltelementes (32) aus einer Sperröffnung (54) eines Sicherungszylinders (50) der Bolzenbaugruppe (40), welches Schaltelement (32) die mechanische Verbindung zwischen Bolzenbaugruppe (40) und Hülsenbaugruppe (13) sichert;
Mittel zum Auseinanderschieben von Hülsenbaugruppe (13) und Bolzenbaugruppe (40).

20. Trennwerkzeug (3000) nach Anspruch 19,
**dadurch gekennzeichnet, dass**
• die Mittel zum Auseinanderschieben von Hülsenbaugruppe (13) und Bolzenbaugruppe (40) einen Exzenterhebel (3010) umfassen, der schwenkbar um eine Gelenkachse (3012) eines Gelenks (3012') mit einem Funktionszylinder (3002) verbunden ist sowie ein Gehäuse (3001), das axial verschiebbar auf dem Funktionszylinder (3002) gelagert ist und zum Auseinanderschieben mit zwei Gelenkbacken (3011a, 3011b) des Exzenterhebels (3010) zusammenwirkt; und
• die Mittel zum mechanischen Hinausschieben eines Schaltelementes (32) aus der Sperröffnung (54) des Sicherungszylinders (50) der Bolzenbaugruppe (40), eine Nadel (3005) umfassen, die mittels einer Halterung (3004) im Funktionszylinder axial verschiebbar gelagert ist und insbesondere mittels Magnetelementen (3003), welche mit ihren Magnetfeldern einander abstossend verschiebbar im Funktionszylinder (3002) gelagert sind, immer wieder in ihre Ausgangsstellung zurückbewegbar ist; und
• Mittel zum temporären, festen Verbinden der Bolzenbaugruppe (40) mit dem Trennwerkzeug (3000) einen Funktionstubus (3007) umfassen, der direkt oder indirekt fest mit dem Funktionszylinder (3002) verbunden ist, und der an seinem dem Funktionszylinder (3002) abgewandten Ende einen nach innen vorstehenden Kragen (3015) aufweist, wobei er einen sich zum Kragen (3015) hin erweiternden, äusseren Durchmesser besitzt, der im Bereich des Kragens (3015) etwas größer ist als der Innendurchmesser des Gehäuses (3001) und sich dieser Endbereich mit dem Kragen (3015) durch axiales Verschieben des Gehäuses (3001) zusammendrücken lässt.
